# EUROPEAN PATENT SPECIFICATION

(11) **EP 0 276 139 B1**
(45) Date of publication and mention of the grant of the patent: **22.06.1994**
(21) Application number: 88300453.3
(22) Date of filing: 20.01.1988
(51) Int. Cl.: A61B 1/00, G02B 23/24

(54) **Endoscope apparatus**
Endoskopiegerät
Appareil d'endoscopie

(30) Priority: 20.01.1987 JP 11009/87; 06.07.1987 JP 104075/87; 31.07.1987 JP 118366/87; 17.12.1987 JP 322606/87
(43) Date of publication of application: 27.07.1988
(73) Proprietor: OLYMPUS OPTICAL CO., LTD., Tokyo 151 (JP)
(72) Inventor: Sakiyama, Katsunori, Hachioji-shi Tokyo (JP); Sato, Tomoaki, Higashiyamato-shi Tokyo (JP)
(74) Representative: Kennedy, Victor Kenneth

(56) References cited:
- GB-A- 2 185 590
- US-A- 3 922 063
- PATENT ABSTRACTS OF JAPAN, vol. 10, no. 247 (P-490)(2303), 26th August 1986 ; & JP-A-61 075 315

## Description

This invention relates to endoscope apparatus where in an insertable sheath can be housed wound up on a drum, as described in the preamble to Claim 1.

Recently, there has been an increasing demand for a medical endoscope, whereby organs within a body cavity can be observed by inserting an elongate insertable sheath into a body cavity, or various, necessary curative treatments can be ride by using a treating tool inserted via a treating tool channel that may be provided in the insertion sheath. Also, in the industrial field, industrial endoscopes are being extensively utilized to enable the Interior of a boiler, turbine, engine or chemical plant to be observed or inspected.

One such industrial endoscope, for example, is a Borehole Scope System (Trade name) made by Furukawa Electric Industrial Company Limited, Japan wherein an illuminating light is transmitted to the tip of a long insertable part by using a light fibre guide to inspect a long pipe or the like and the insertable part can be housed wound up on a drum. In such apparatus, a light source is fitted on a drum rotating shaft on the drum side integrally with a frame of this drum and the optical axis of this light source and the optical axis of the fibre light guide are ride to coincide with each other, to enable light from the light source to enter the light guide.

An illuminating apparatus provided with a fibre bundle wound on a drum is disclosed in the Gazette of Japanese Utility Model Application Laid Open No. 9307/1987. However, in this illuminating apparatus, the light source is also housed within the drum.

In Japanese published application number 61-75315, an endoscope is disclosed wherein an elongate insertable part carries a tip part containing an objective lens, an imaging device, and miniaturised circuitry. A camera control, a light source and a monitor are contained in the body of the unit, which is not rotated, and which is attached to a rotatable drum part onto which the insertable part is to be wound. While the optical connection between the light source and the light transmitting fibre bundle is made simply by aligning the fibre bundle and the light source along the axis of rotation of the drum, the electrical connections between the fixed and rotatable parts of the apparatus is made by means of a curled cable. The durability of such a curled cable is low, and a slip ring must be used.

However, there are problems that, if the drum and light source are made integral with each other so as to be inseparable in use, the drum will be so large and heavy as to be inconvenient in use, being difficult to set and carry and that, as the light source cannot be set in any optional place, the operability of the light source will be low.

Also, in the conventional drum, as the insertable part is wound up on the outer periphery of the drum, if an insertable part low in the flexibility is wound up on a drum of small diameter, the bending rigidity will be so high that the wound insertable part will expand in the direction of a large diameter. Generally, a long endoscope is used to inspect a pipe or the like and is inserted by pushing in the insertable part. The longer the insertable part, the farther the inserting operating point from the tip of the insertable part. Due to the running resistance of the tip, the insertable part will buckle and will become difficult to insert. Therefore, the longer the insertable part, the lower the flexibility of the Insertable part must be made, that is, its rigidity must be made higher.

Therefore, in the known prior art drums, the longer the insertable part and the lower the flexibility, the larger the diameter of the drum must be, and therefore the weight and portability have been problematical.

One object of the present invention is to provide an endoscope apparatus wherein the insertable part can be housed wound up on a drum that is light and small, for improved portability, workability and operability.

Preferably the space required for housing the assembled drum unit is small.

Advantageously an endoscope apparatus is provided wherein the insertable part can be housed wound up on a drum, a long insertable part low in flexibility can be housed, the drum unit can be made small and light and the portability can be elevated.

Endoscope apparatus in accordance with the present invention has the features set out in the characterising part of Claim 1.

Other features and advantages of the present invention are defined in the dependent Claims.

A number of exemplary embodiments will now be described with reference to the drawings, in which:
Figures 1 to 11 relate to a first embodiment of the present invention:-
Figure 1 being a perspective view showing an entire endoscope apparatus;
Figure 2 is an explanatory view showing the drum interior and light source connector;
Figure 3 is an explanatory schematic view showing the formation of an endoscope apparatus;
Figure 4 is a block diagram showing the formation of the video processor used in this embodiment;
Figure 5 is a block diagram showing the formation of the processing circuit;
Figure 6 is a sectional view shoving the tip part of an insertable part, otherwise referred to as an insertion sheath;
Figure 7 is a sectional view of the drum used in this embodiment;
Figure 8 is a partly sectional side view of the drum;
Figure 9 is a magnified sectional view of part of the side of a drum;
Figure 10 is a sectional view of the provided light source connector; and Figure 11 is a magnified sectional view of the part A in Figure 10.

Figures 12 and 13 relate to a second embodiment of the present invention:-

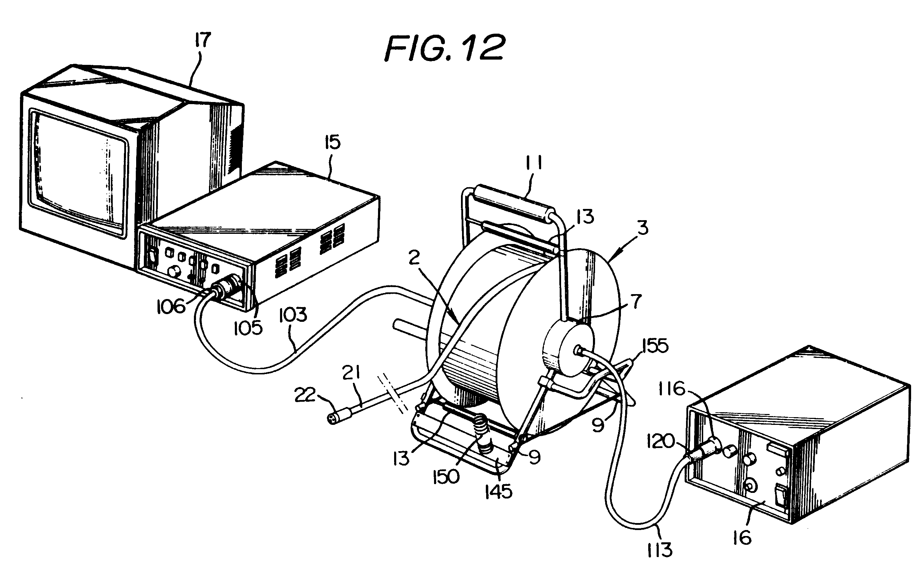

Figure 12 being a perspective view showing the entire endoscope apparatus; and

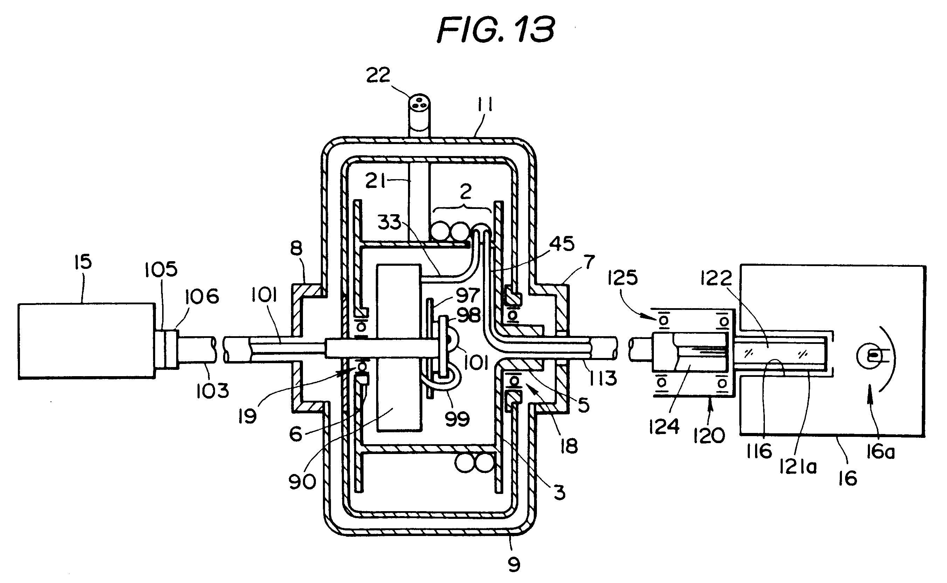

Figure 13 an explanatory view showing the endoscope apparatus formation.

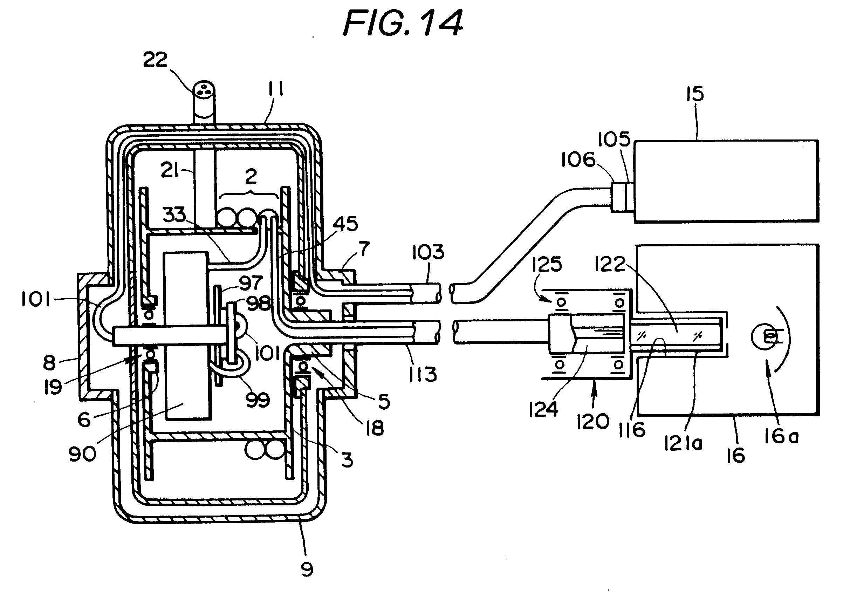

Figures 14 to 17 relate to a third embodiment of the present invention, in which:-
Figure 14 is an explanatory view showing the formation of the endoscope apparatus;

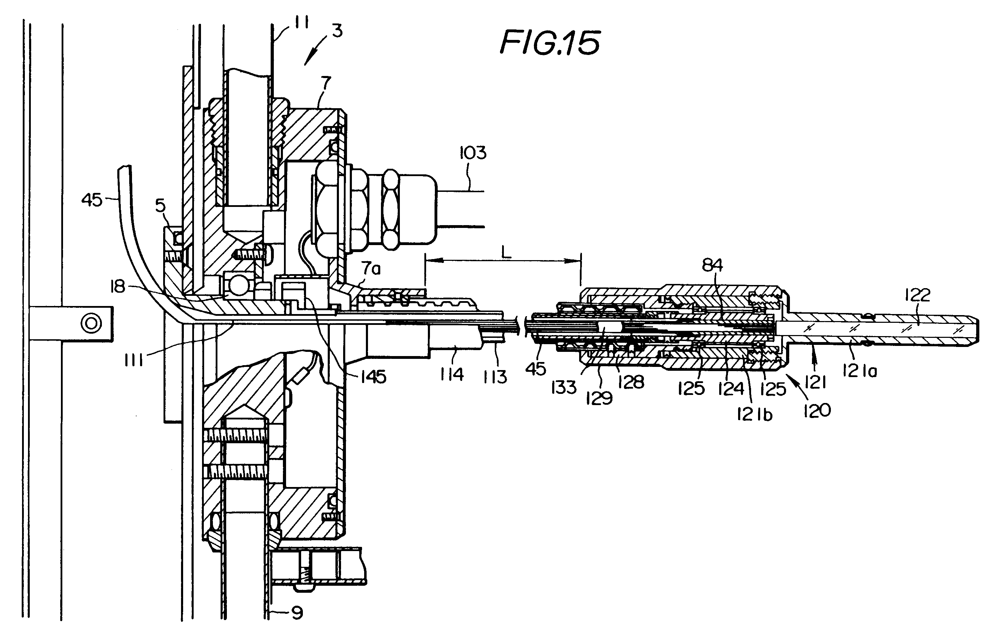

Figure 15 is a sectional view showing a fibre light guide part extending out of a drum;

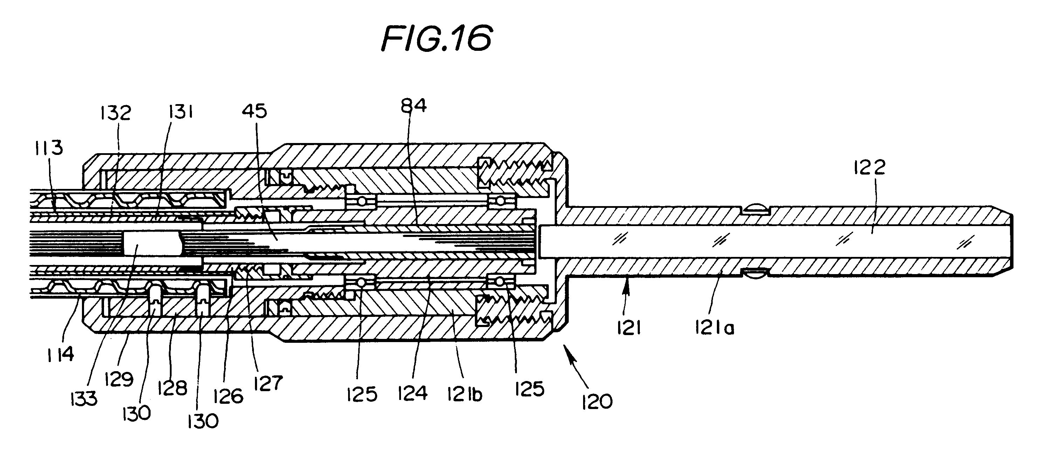

Figure 16 is a sectional view of a light source connector; and

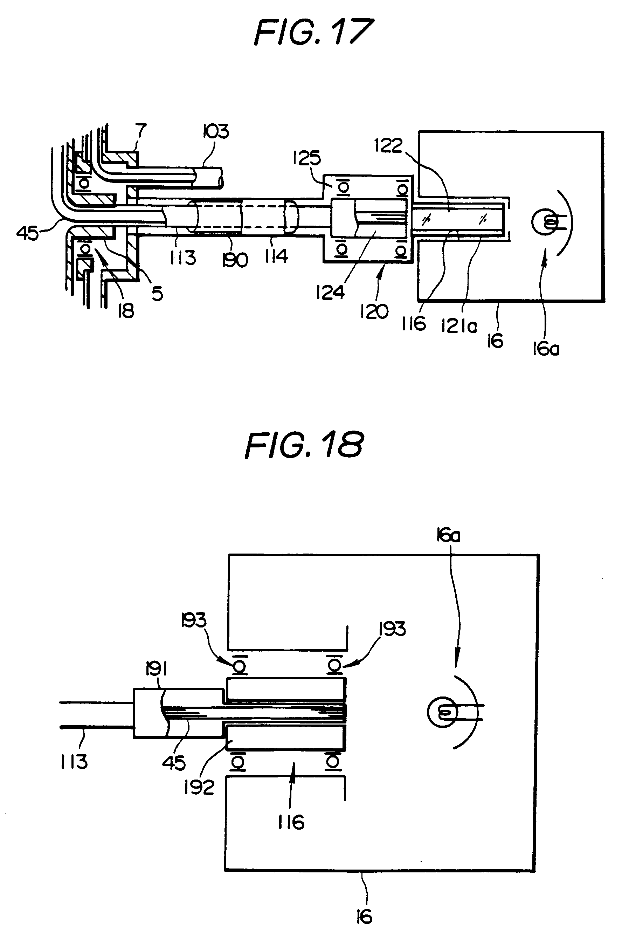

Figure 17 is an explanatory view showing a modification of a fibre light guide extending out of a drum.
Figure 18 is an explanatory view showing a light source apparatus and light source connector in a fourth exemplary embodiment of the present invention.

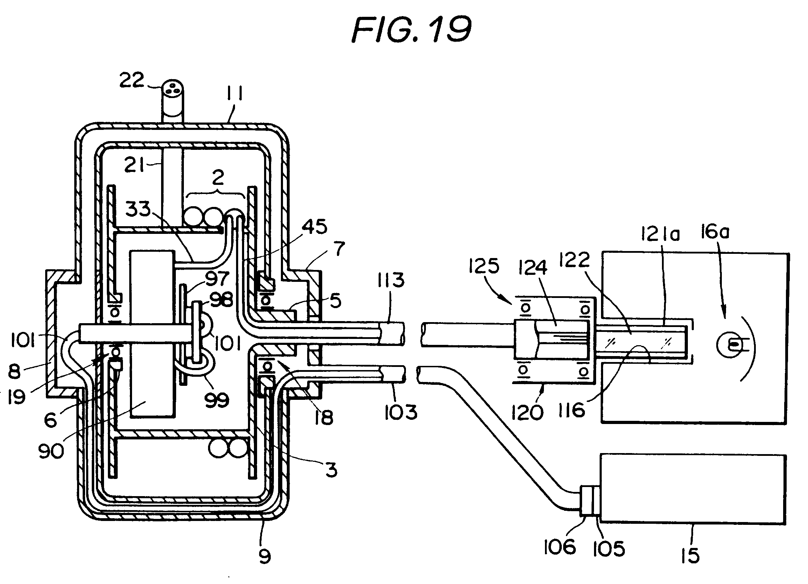

Figure 19 is an explanatory view showing a fifth embodiment of the present invention.

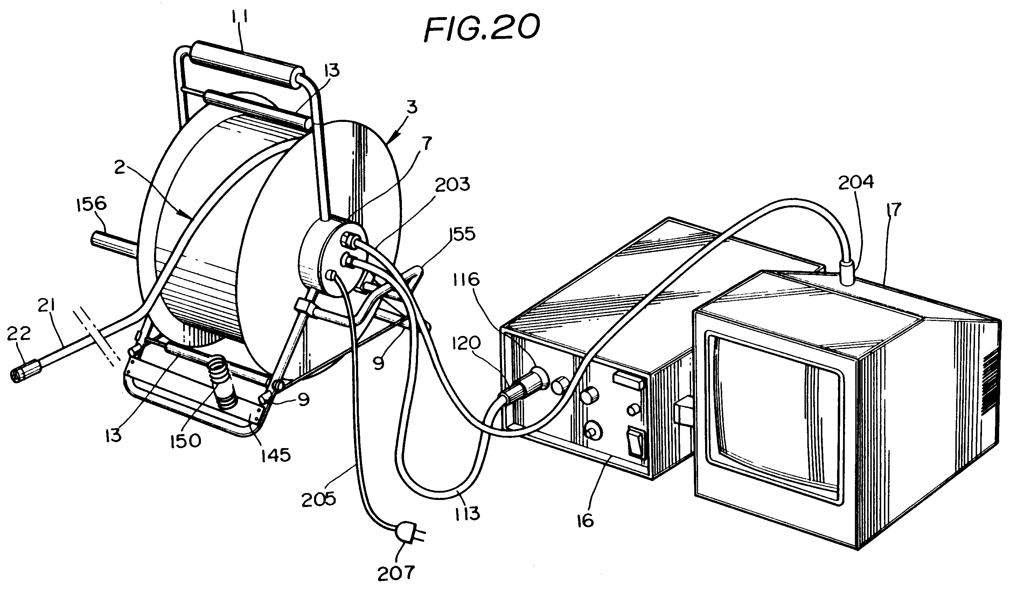

Figures 20 to 22 relate to a sixth embodiment of the present invention:-
Figure 20 being a perspective view showing the entire endoscope apparatus;

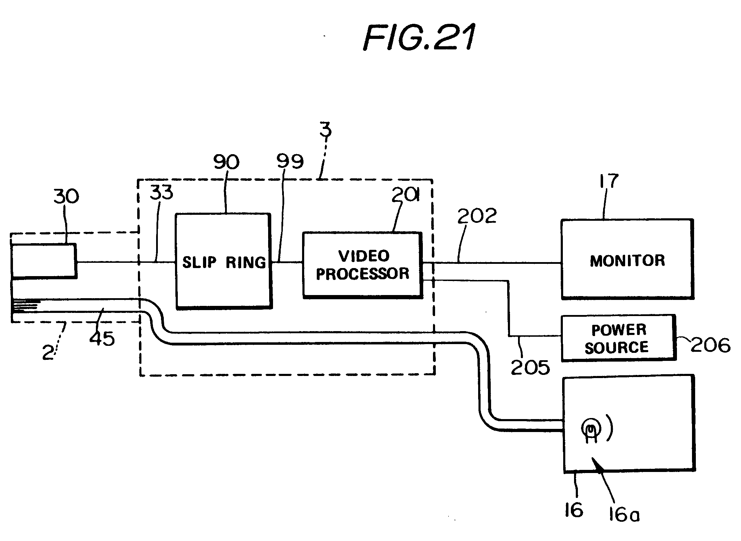

Figure 21 is an explanatory schematic view showing the formation of the endoscope apparatus; and

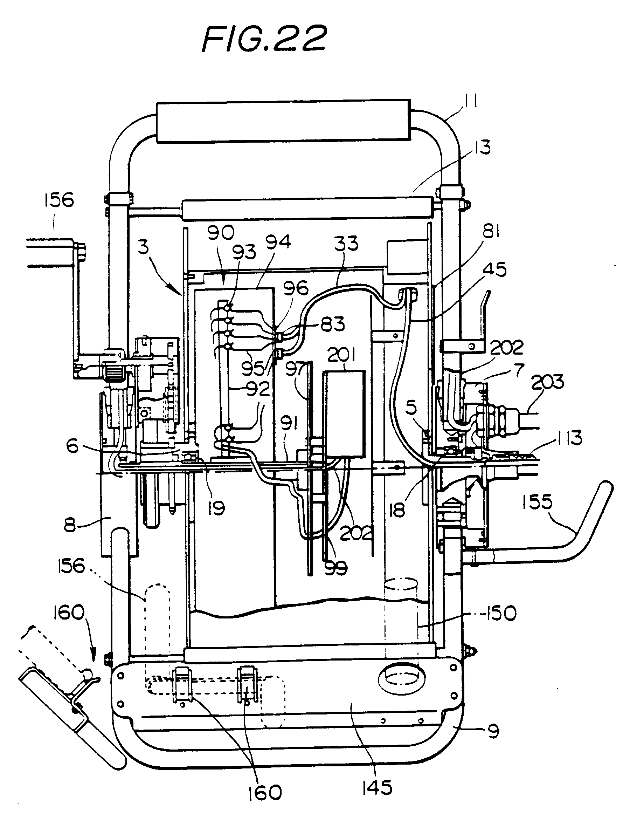

Figure 22 a sectional view of the drum that may be provided.

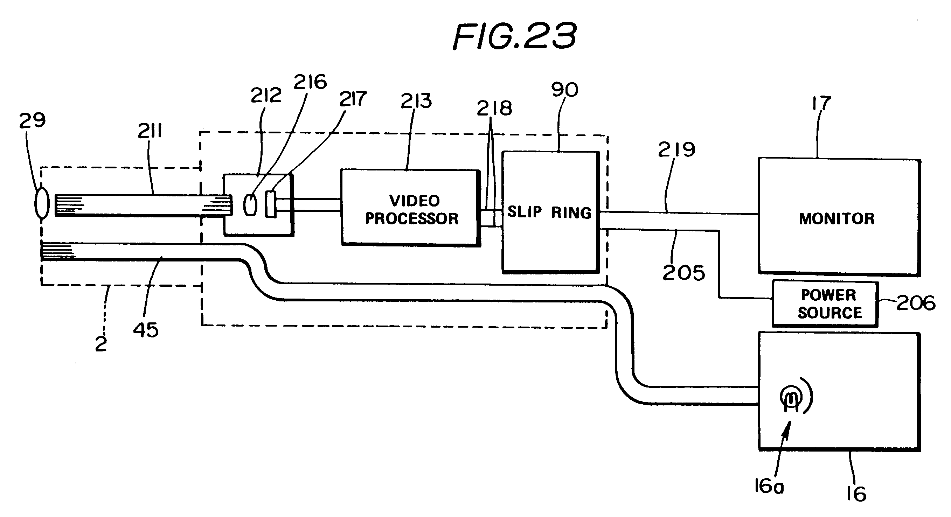

Figure 23 is an explanatory schematic view showing the formation of another endoscope apparatus.

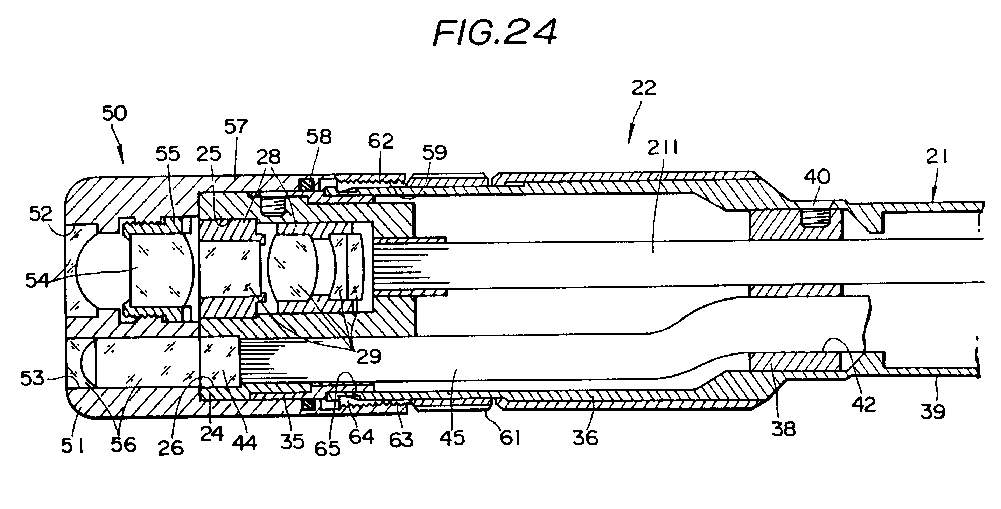

Figure 24 is a sectioned view showing the tip portion of the insertable part used in the Figure 23 embodiment.

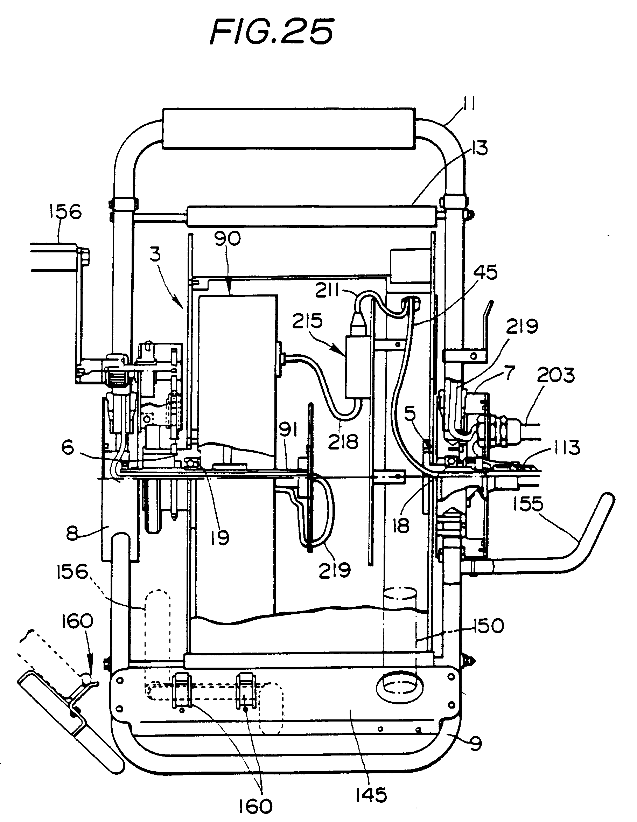

Figure 25 is a sectional view of the drum in this embodiment.

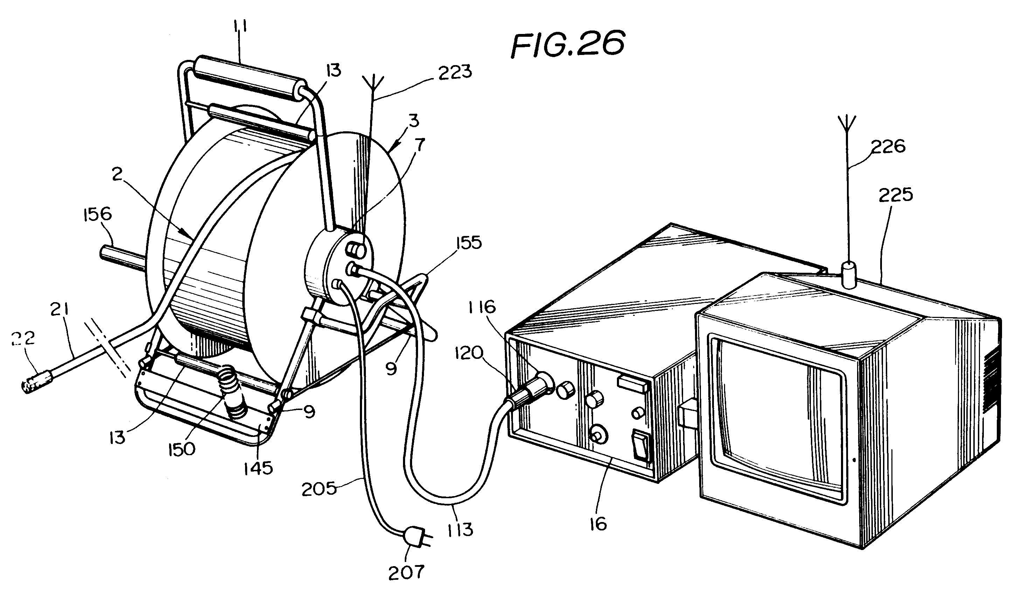

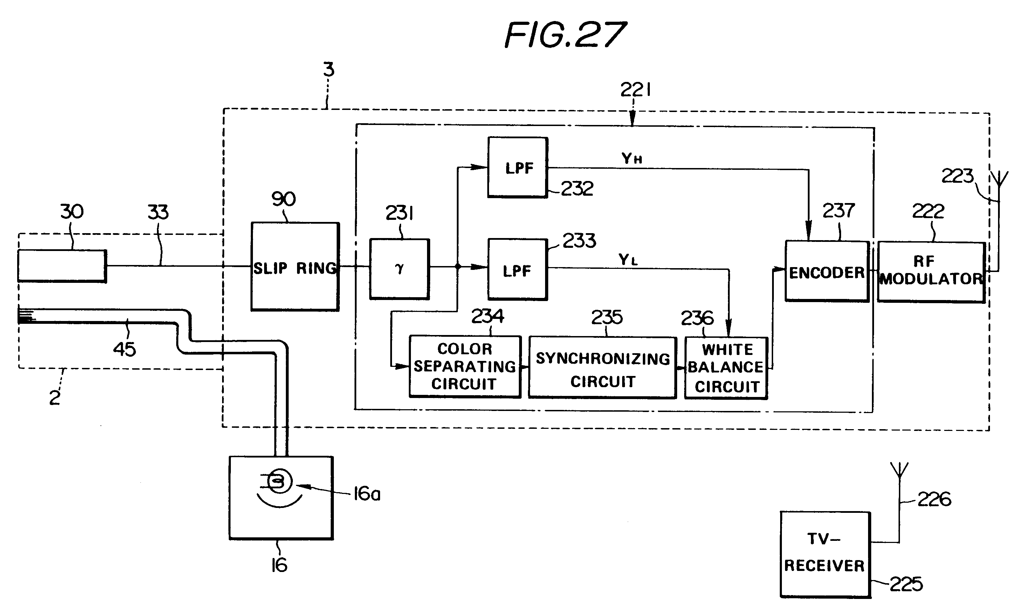

Figures 26 and 27 relate to an eighth embodiment of the present invention:-
Figure 26 being a perspective view showing the entire endoscope; and
Figure 27 a schematic explanatory view showing the formation of the endoscope.

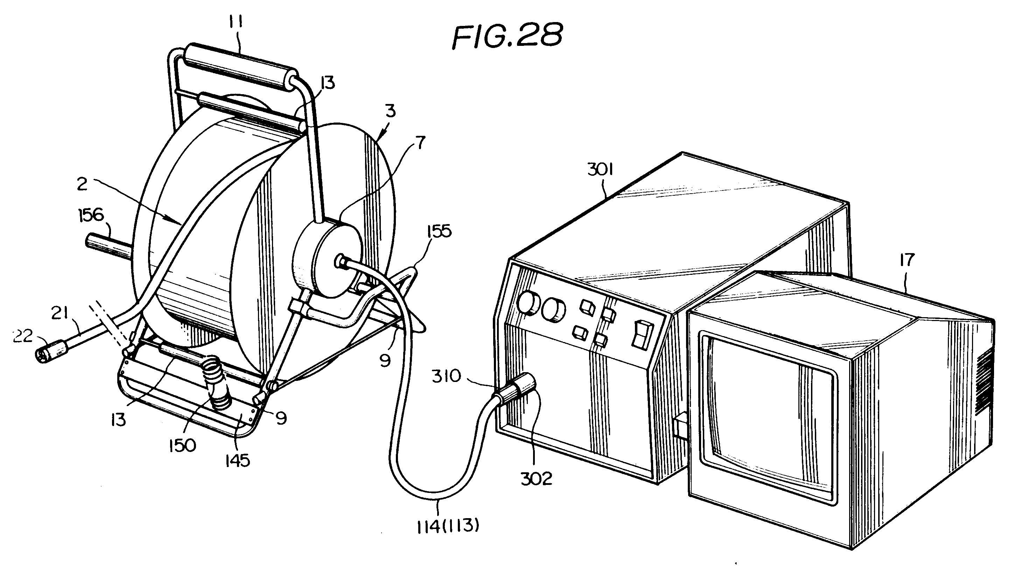

Figures 28 to 32 relate to a ninth embodiment of the present invention:-
Figure 28 being a perspective view showing the entire endoscope apparatus;

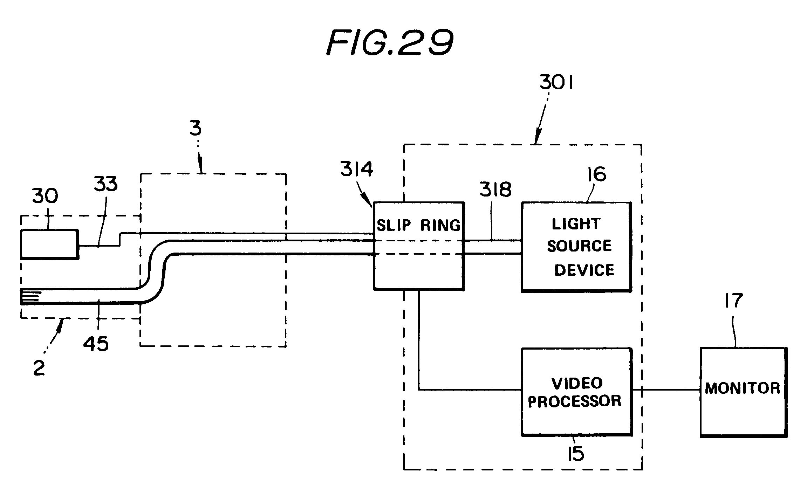

Figure 29 an explanatory schematic view showing the formation of the endoscope apparatus;

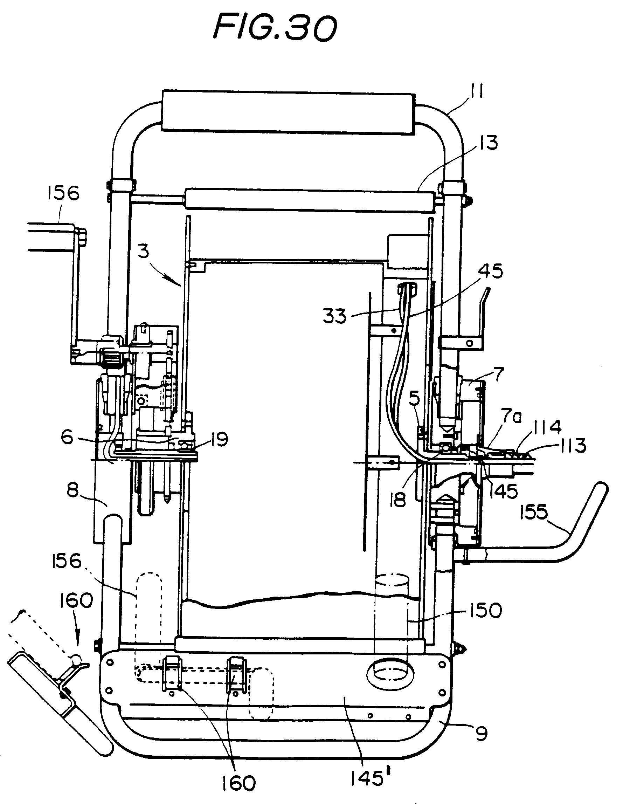

Figure 30 a sectional view of the drum;

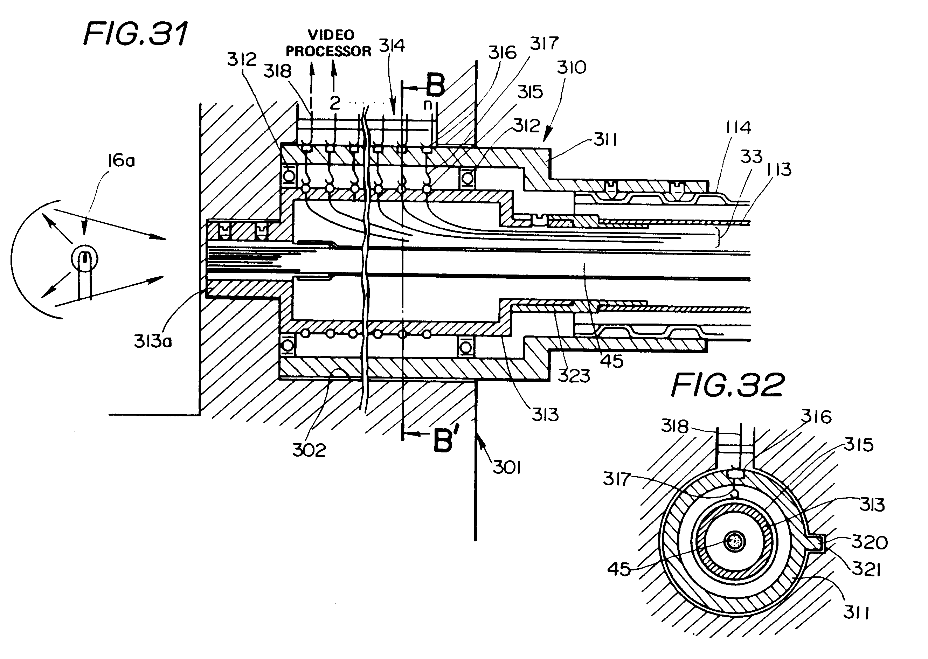

Figure 31 is a sectional view of a light source connector; and
Figure 32 a sectional view on line B-B' in Figure 31.

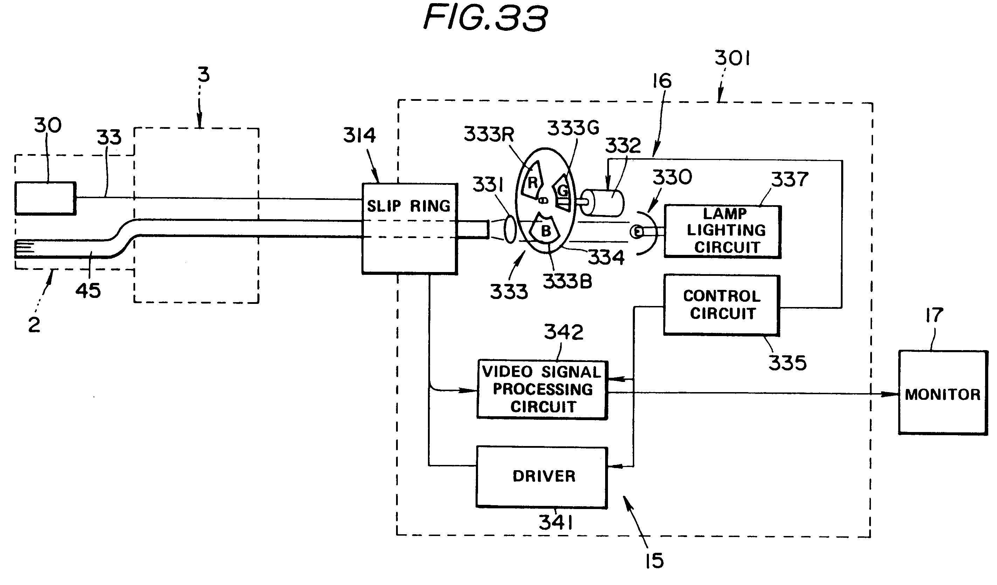

Figures 33 to 37 relate to a tenth embodiment of the present invention, in which:-
Figure 33 is an explanatory schematic view showing the formation of the endoscope;

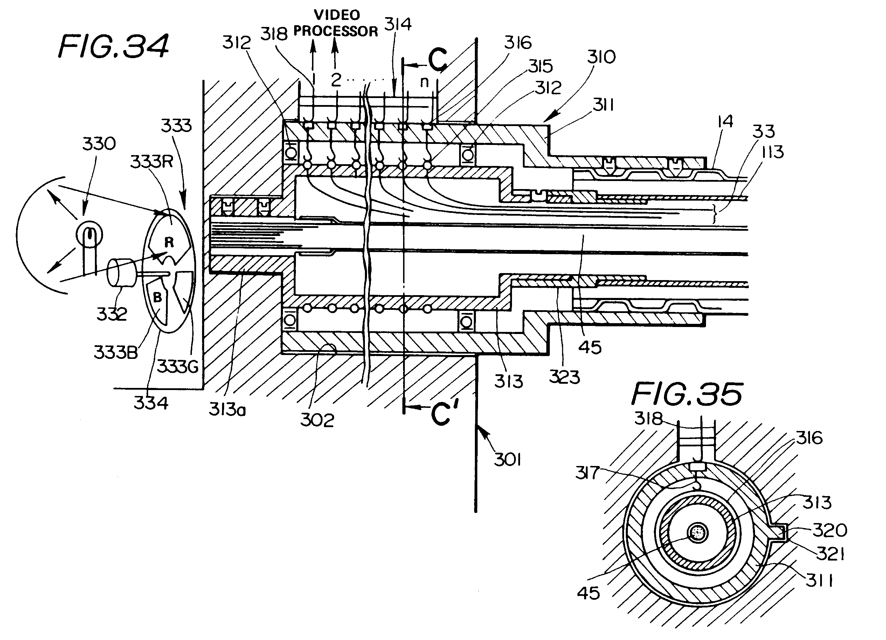

Figure 34 is a sectional view of a light source connector;
Figure 35 is a sectional view of the line C-C' in Figure 34;

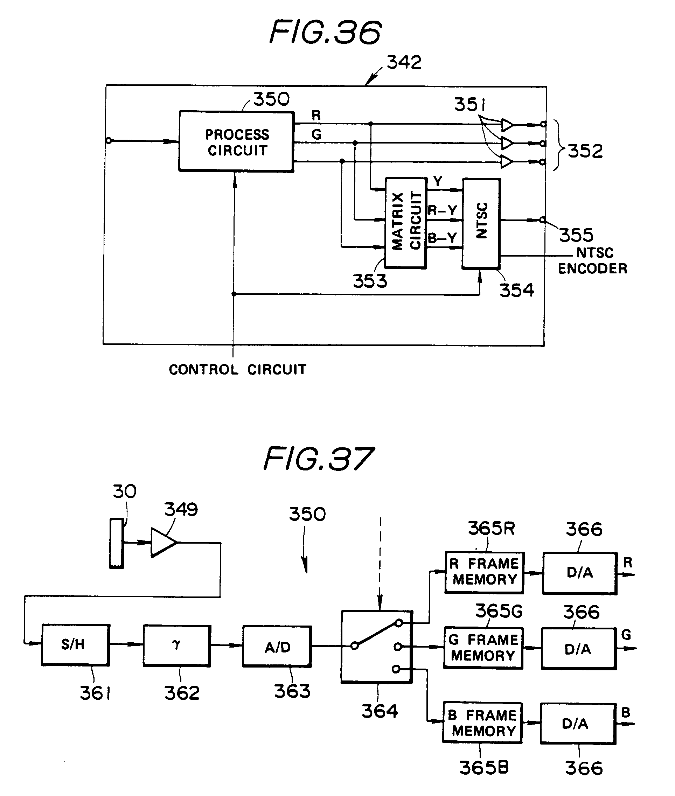

Figure 36 is a block diagram showing the formation of a video processor; and
Figure 37 is a block diagram showing the formation of a processing circuit.

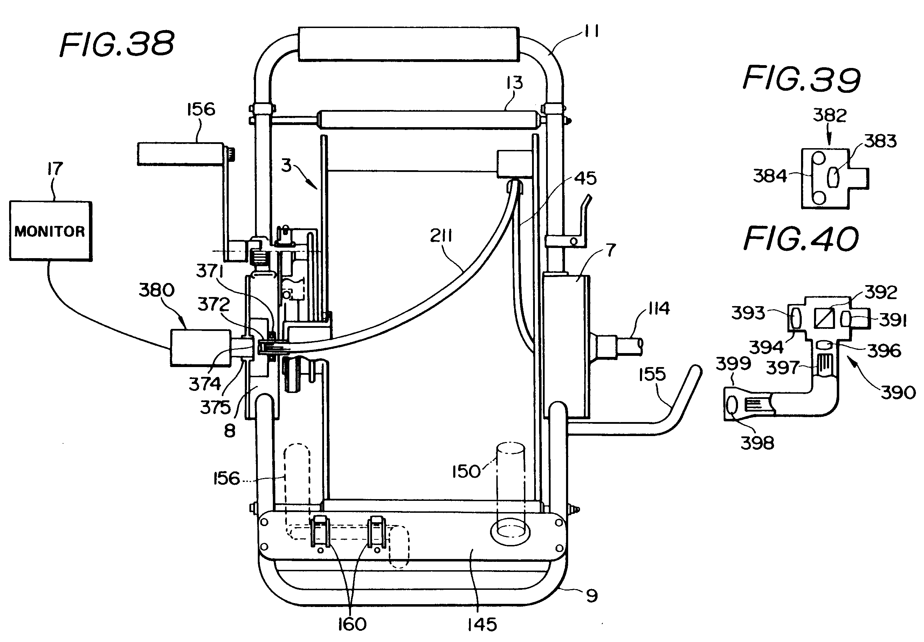

Figures 38 to 40 relate to an eleventh embodiment of the present invention:-
Figure 38 being a sectional view of a drum;
Figure 39 an explanatory view showing a still camera; and
Figure 40 an explanatory view showing a display unit.

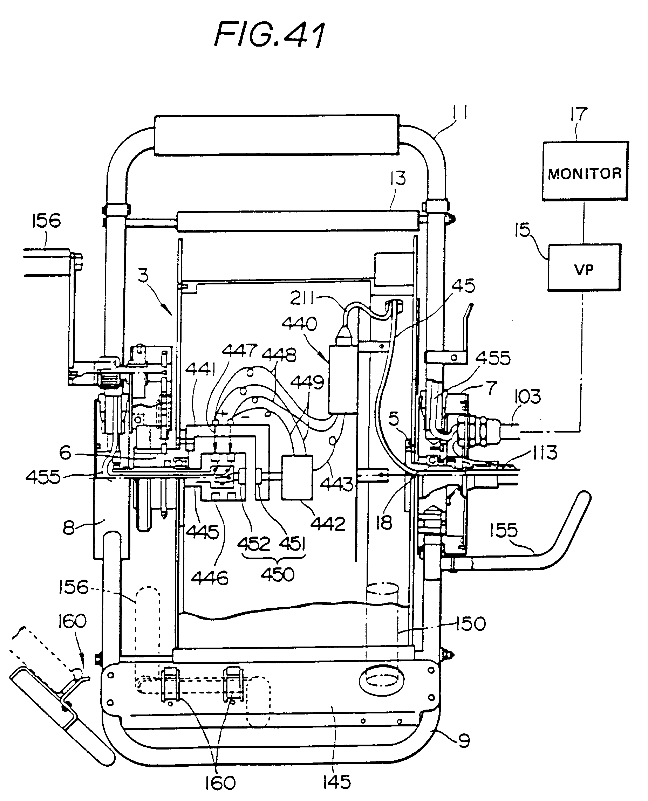

Figure 41 is a sectional view of a drum in a twelfth embodiment of the present invention.

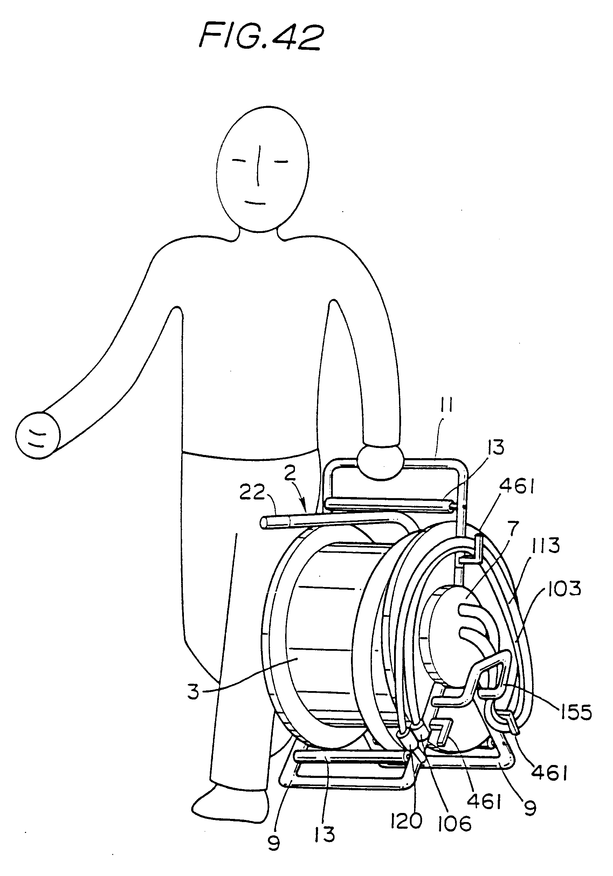

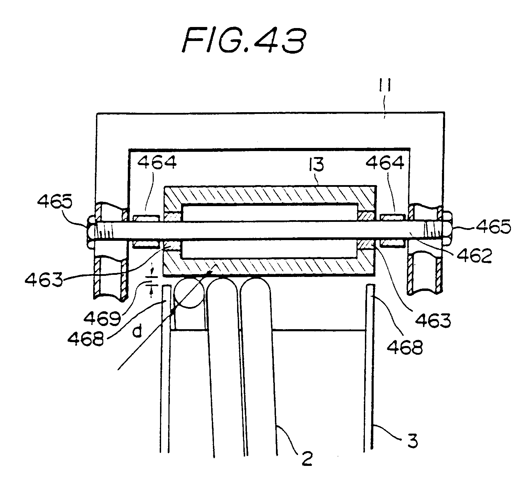

Figures 42 and 43 relate to a thirteenth embodiment of the present invention, in which:-
Figure 42 is a perspective view showing the endoscope apparatus being carried; and
Figure 43 is a sectional view showing details in the vicinity of a roller in this embodiment.

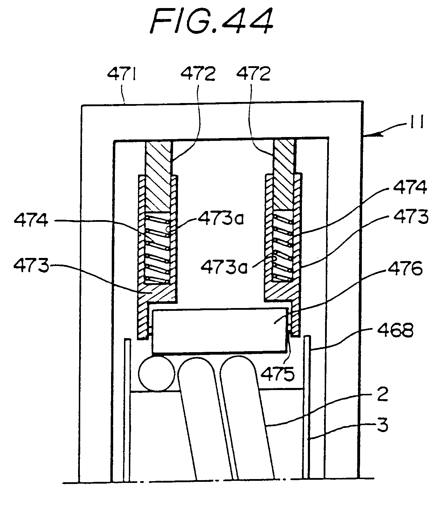

Figure 44 is a partly sectional view showing details in the vicinity of a roller in a fourteenth embodiment of the present invention.

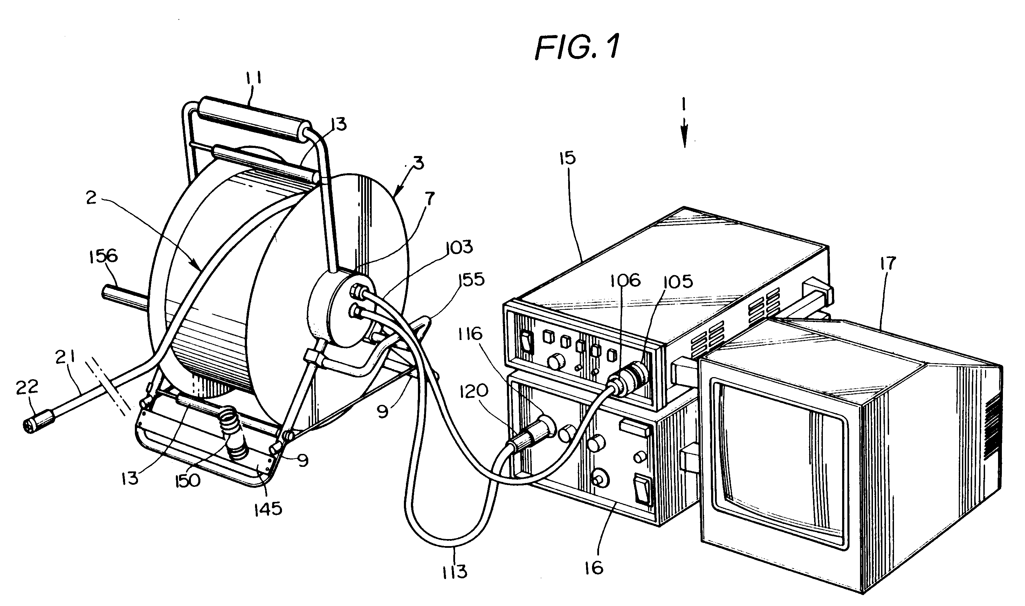

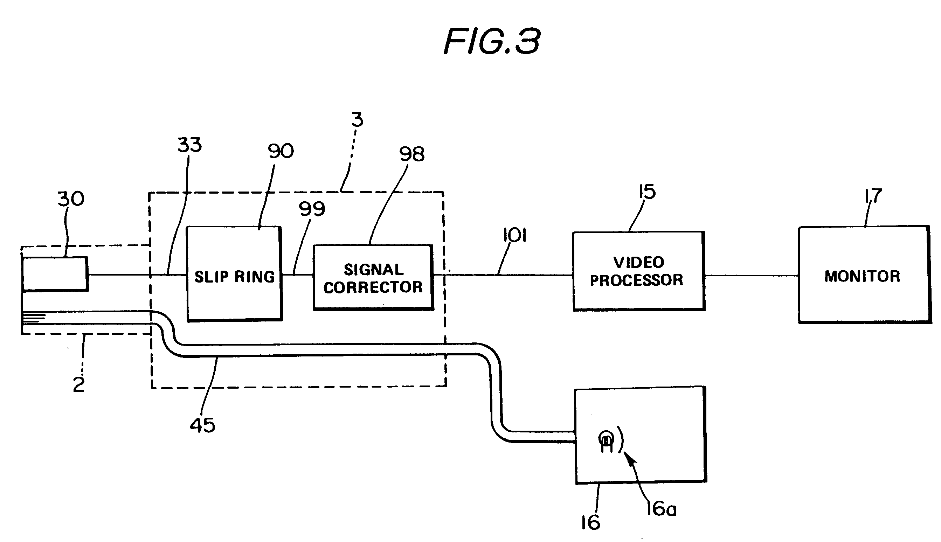

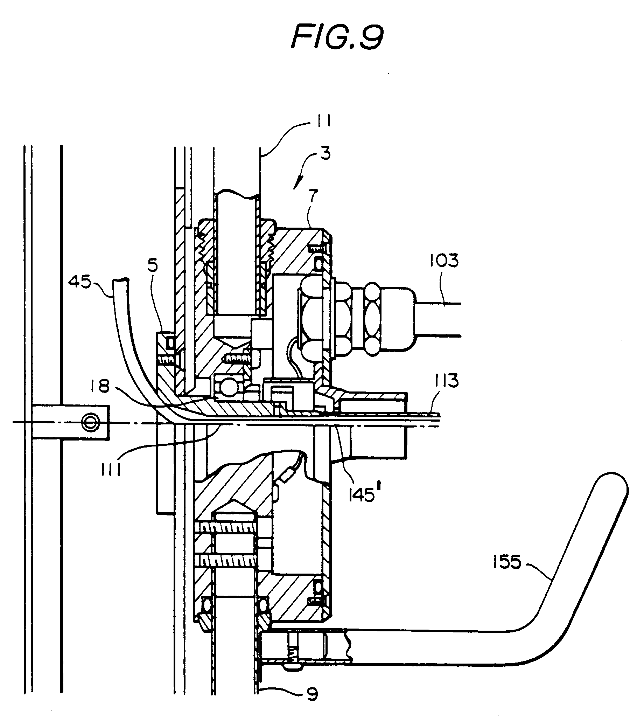

Figures 1 to 11 show the first embodiment of the present invention.

As shown in Figure 1, an endoscope apparatus 1 is provided with an elongate flexible endoscope insertion sheath, forming an insertable part 2 which is fixed at the base end to a drum 3 so as to be housed as wound up on this drum 3. The endoscope apparatus is provided also with a video processor 15, light source apparatus 16 and monitor 17, separately from the drum.

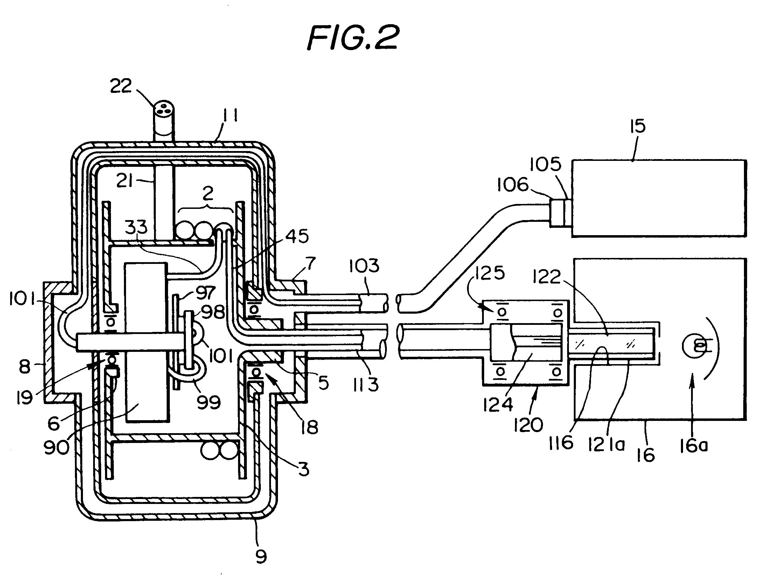

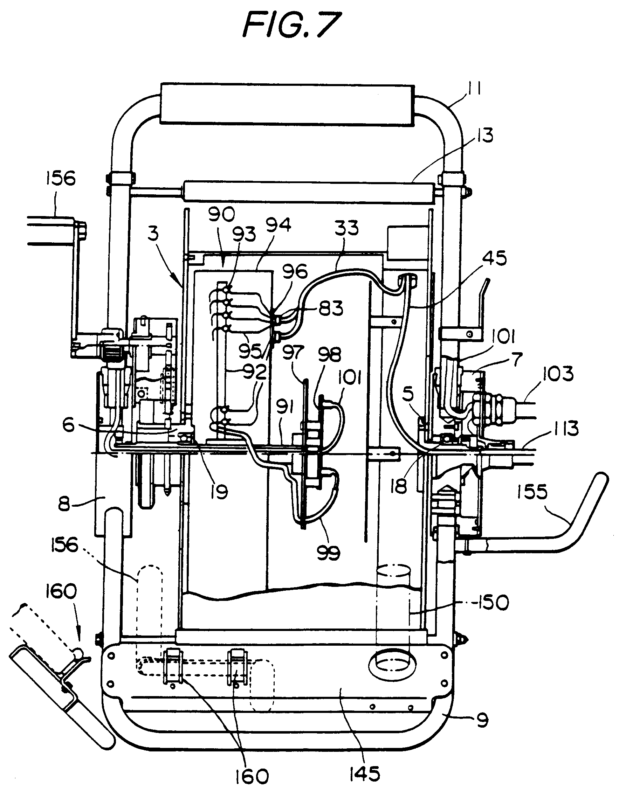

As shown in Figures 2 and 7, the drum 3 is provided at both ends in the rotary axial direction with cylindrical rotary shaft parts, 5 and 6, which are rotatably supported respectively by bearing parts, 7 and 8, through bearings 18 and 19. Leg-like frames 9 rotatably supporting the drum 3 are provided on the lower side between the bearing parts 7 and 8. A handle 11 for carrying the drum 3 is provided on the upper side between the bearing parts 7 and 8, and is formed of a pipe.

Rollers 13 are rotatably fitted respectively to the frames 9 and handle 11, so as to be opposed to the peripheral surface of the drum 3. The insertable part 2 is inserted through between the peripheral surface of the drum 3 and the rollers 13 so as to be wound up on the drum 3 and to be regulated by the rollers 13 in the expansion in the outer peripheral direction of the wound insertable part.

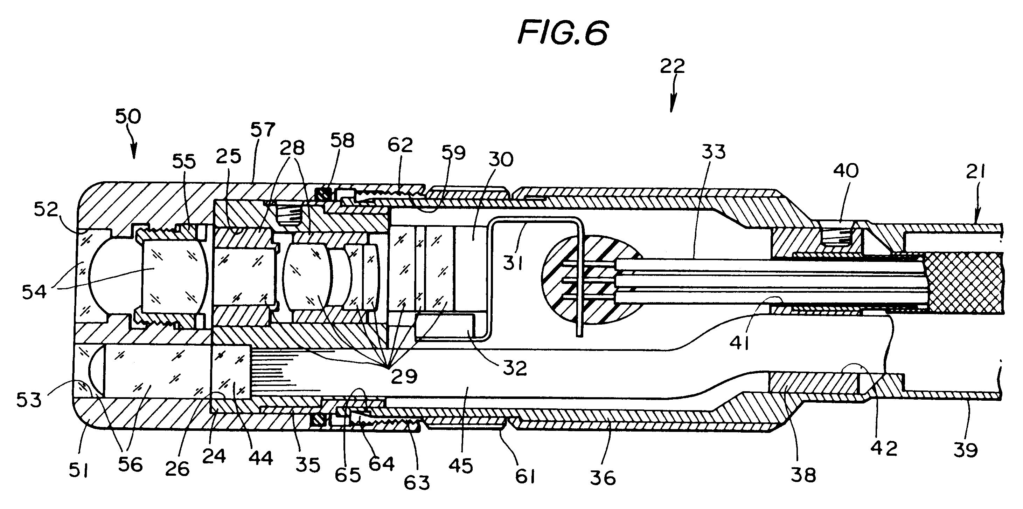

On the other hand, the insertable part 2 is formed by connecting a rigid tip part 22 to the tip of a flexible pipe. The tip part 22 is formed as shown in Figure 6.

The tip part 22 is provided with a rigid tip body 24 in which an observation aperture 25 and illuminating aperture 26 are formed in the lengthwise direction of the insertable part 2. A part of an objective system 29 held by a lens frame 28 is fitted in the observation aperture and the other parts of the objective system 29 are bonded to the rear end part of the tip body 24. A solid state imaging device 30 is secured to the rear end surface of the objective system 29 and is fixed on a flexible substrate 31 on which an electronic module 32 is fitted. Signal lines 33 are connected to the rear end of the flexible substrate 31, are inserted through the flexible pipe 21 and are extended out of the base end of the insertable part 2.

A cylindrical cover member 36 is connected to the rear end of the tip body 24 through a connecting ring 35, and contains the solid state imaging device 30 and flexible substrate 31. A columnar fixing member 38 is fixed to the rear end of this cover member 36 and has an outer cover 39 of the flexible pipe 21 fixed in the tip part, for example, with a screw 40. A signal line insertion aperture 41 and light guide insertion aperture 42 are provided in the fixing member 38. The signal lines 33 are inserted and fixed through the hole 41.

A light distributing lens 44 is fitted in the illuminating aperture 26. A fibre-optic light guide 45 is connected to the rear end of this light distributing lens 44, is inserted through the light guide aperture 42 of the fixing member 38, and the flexible pipe 21, to extend out of the base end of the insertable part 2.

A tip adapter 50 is fitted to the tip of the tip body 24 and is provided with a substantially columnar adapter body 51 in which an observing aperture 52 and illuminating aperture 53 are formed in the lengthwise direction of the insertable part 2 in the positions corresponding respectively to the hole 25 and hole 26 of the tip body 24. A lens system 54 forming an image forming optical system together with the objective system 29 is fitted in the observing aperture 52. A part of this lens system 54 is held by a lens frame 55 screwed in the hole 52 so as to be free to be advanced or retracted. The focusing of the lens system can be adjusted by advancing or retracting the lens frame 55. The lens system 54 can be designed to vary the depth of focus or the visual field. A light distributing lens system 56 is fitted in the hole 53.

The adapter body 51 is formed to be cylindrical on the rear end side and is externally fitted in this cylindrical part 57 on the tip body 24. An O-ring 58 is interposed between the cylindrical part 57 and tip body 24. A female screw-thread 59 is formed in the rear end of the cylindrical part 57. A connecting ring 61 is loosely fitted on the outer peripheral part of the cover member 36 to be rotatable, and a male screw-thread 62 engages with the female screw-thread 59 formed on the outer peripheral surface of the front part of the connecting ring 61. A plurality of slits 63 are formed in the lengthwise direction in the front part of the connecting ring 61 on which this male screw-thread 62 Is formed. An inwardly-directed projection 64 is formed in the front end of the connecting ring 61 and is engaged In a recess 65 formed on the outer peripheral part of the cover member 36 so that, when the male screw-thread 62 of the connecting ring 61 is engaged with the female screw-thread 59 of the adapter body 51, the tip adapter 50 will be fixed to the tip body 24.

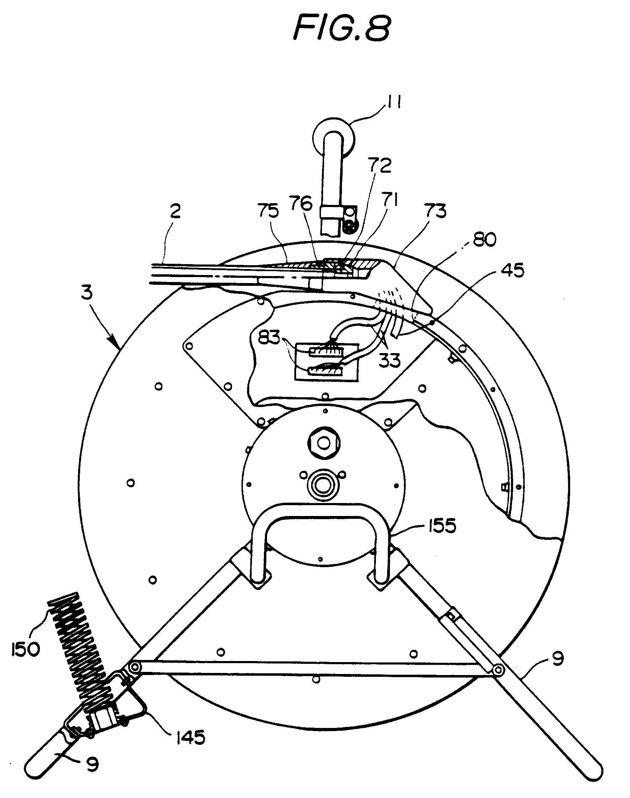

The insertable part 2 is formed in the base end part as shown in Figure 8.

A substantially tubular mouthpiece 71 is connected to the rear end of the flexible insertable part 2. This mouthpiece 71 is formed to be large in the diameter on the rear end side on the outer peripheral part and has a mouthpiece retainer 72 loosely fitted on the small diameter part on the front end. A male screw-thread is formed on the outer peripheral part of this mouthpiece retainer 72. An insertable part holder 73 is externally fitted to the mouthpiece 71. A female screw-thread to be engaged with the male screw-thread of the mouthpiece retainer 72 is formed on the front and side of this insertable part holder 73. The mouthpiece 71 is held by the mouthpiece retainer 72 and insertable part holder 73. An O-ring (not illustrated) is interposed between the mouthpiece 71 and insertable part holder 73. A substantially cylindrical member 75 is externally fitted on the insertable part 2 on the front side of the insertable part holder 73 to prevent buckling. A ring-like connecting member 76 is fixed to the rear end part of this member 75. A male screw-thread to engage with the female screw-thread of the insertable part holder is formed on the outer peripheral part of this connecting member 76. The buckling-preventing member 75 is connected and fixed to the Insertable part holder 73 by engaging the male screw-thread with the female screw-thread.

As shown in Figure 8, an insertable part fitting aperture 80 is formed in the peripheral part of the drum 3. The insertable part holder 73 is to be fixed with respect to the drum 3 so as to cover the insertable part fitting hole 80.

A path communicating with an internal cavity of the insertable part 2 is formed in the insertable part holder 73 and is bent and formed so as to communicate with the insertable part fitting hole 80 of the drum 3.

As shown in Figure 8, the signal lines 33 and fibre-optic light guide 45 are inserted through the insertable part 2 to pass through the path in the insertable part holder 73, extend out of this insertable part holder 73, and be inserted through the insertable part aperture 80 in the drum 3 and are led into this drum 3. The signal lines 33 are fitted at the base ends with plugs 83. The light guide 45 is fitted at the base end with a tip pipe 84.

As shown in Figure 7, a slip ring (rotary electric contact) 90 is provided within the drum 3 and is provided with a fixed shaft 91 fixed to the bearing part 8, a disc-like fixed plate 92 fixed to this fixed shaft 91 has fixed rings 93 provided on this fixed plate 92, and a rotor 94 rotates together with the drum 3 with the fixed shaft 91 as a centre, so that slip ring brushes 95 are in sliding contact with the fixed rings 93, and receptacles 96 are provided on the side of the rotor 94 and connected to the slip ring brushes 95. The plugs 83 provided at the base ends of the signal lines 33 are connected to the receptacles 96. A terminal plate 97 is fitted to the fixed shaft 91 and is provided with a signal correcting circuit 98 for shaping the waveform or the like. Signal lines 99 connected to the fixed rings 93 are connected to the signal correcting circuit 98. A signal line 101 is connected to the signal correcting circuit 98, is inserted through a hollow part of the fixed shaft 91 to extend out of the side of the drum 3, and is inserted through the hollow part of the handle 11 from one bearing part 8 and led into the other bearing part 7. A signal cable 103 is connected to the side of this bearing part 7. The signal line 101 is inserted through this signal cable 103. A connector 106 detachably connectable to a connector socket 105 of the video processor 15 is provided at the tip of this signal cable 103. The signal line 101 is connected to this connector 106.

Thus, the solid state imaging device 30 provided in the tip part 22 of the insertable part 20 is connected to the video processor 15 through the signal lines 33, plugs 83, sockets 96, slip ring brushes 95, fixed rings 93, signal lines 99, signal correcting circuit 98, signal line 101, connector 106 and connector socket 105, and is driven by a driver within the video processor 15. The output signal is processed to be a video signal by the video processor 15. The video signal produced by this video processor is input into the monitor 17 in which an observed image is displayed.

On the other hand, as shown in Figures 2, 7 and 9, the light guide 45 led into the drum 3 is inserted through a central hole 111 of the rotary shaft part 5 and is extended in the rotary axial direction out of the bearing part 7 fitted with the signal cable 103.

A flexible connecting cable 113 is connected at the base end by a nut 145' to the middle of the side of the rotary shaft part 5 and the light guide 45 is inserted through this connecting cable 113. A light source connector 120 removably connectable to a connector socket 116 of the light source apparatus 16 is provided at the tip of the connecting cable 113.

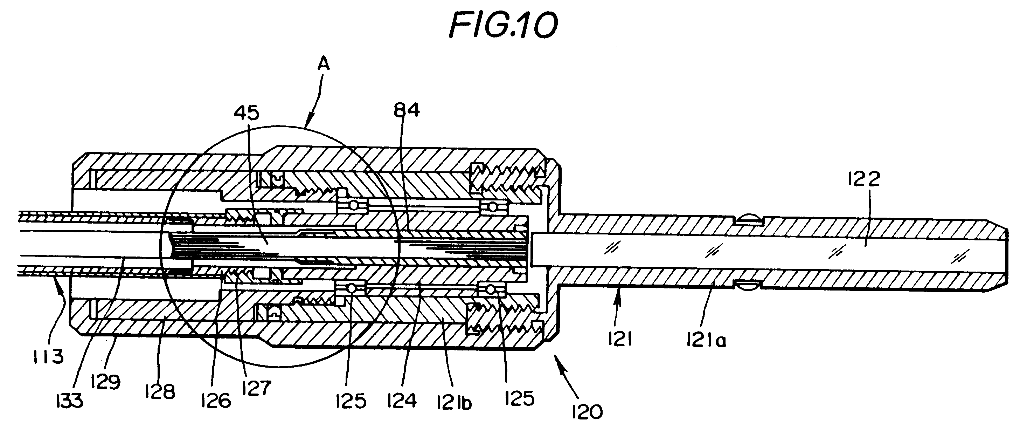

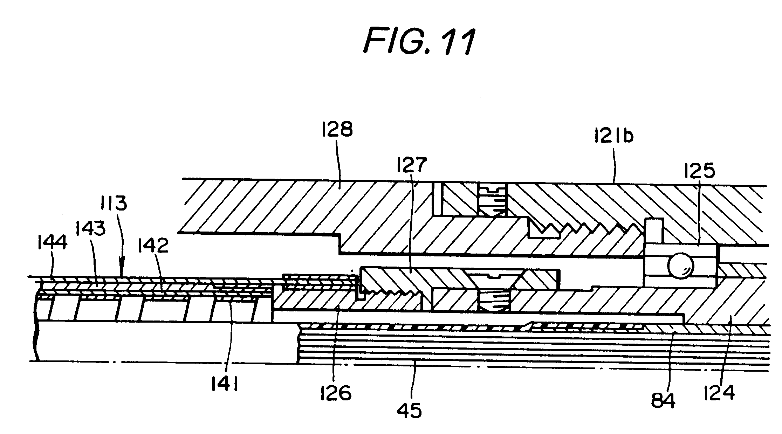

The light source connector 120 is formed as shown in Figures 10 and 11.

The light source connector 120 is provided with a connector body 121 comprising a cylindrical small diameter part 121a on the tip side and a cylindrical large diameter part 121b. A columnar rod lens 122 formed by a single fibre having a core and cladding is contained and fixed within the small diameter part 121a. On the other hand, the light guide 45 is inserted and arranged in the end part within the large diameter part 121b opposed to the rear end part of the rod lens 122, so that the optical axes mutually coincide. This light guide 45 is projected out of the end of the connecting cable 113 and is fixed to a rotary mouthpiece 124 through the tip pipe 84. This rotary mouthpiece 124 is rotatably held within the large diameter part 121b through bearings 125. The connecting cable 113 is fitted at the end with a connecting mouthpiece 126 which is connected and fixed to the rear end of the rotary mouthpiece 124 through a connecting ring 127. Therefore, the light guide 45 and connecting cable 113 are rotatable with respect to the connector body 121 and rotate with the rotation of the drum 3.

A tube body 128 is connected and fixed to the rear end of the connector body 121. The light guide 45 held by the bearings 125 and rotary mouthpiece 124 is prevented by this tube body 128 from being pulled out. A tubular cover member 129 is screwed to the large diameter part 121b of the connector body 121 and the outer peripheral part of the tube body 128.

As shown in Figure 11, the connecting cable 113 holds a wall formed, for example, of a spiral tube 141, net tube 142 and double cover tube 143 in the order from inside to outside.

As shown in Figure 2, the small diameter part 121a of the connector body 121 is inserted into the connector receptacle 116 so that the tip surface of the rod lens 122 within this small diameter part 121a may be opposed to a lamp 16a within the light source apparatus 16. The light guide 45 of fibres and connecting cable 113 are rotatable with respect to the connector body 121 and are therefore rotatably connected to the light source 16.

In this embodiment, as shown In Figure 1 and others, a holder fitting plate 145 is provided on one frame 9 and is fitted with a tip holder 150 holding and protecting the tip part 22 of the insertable part 2 at such time as housing the insertable part 2. This tip holder 150 may be a coil spring as shown in Figure 8 or may be a pipe or the like. The material may be a metal, plastics or the like. The tip part 22 can be protected by being inserted into the tip holder 150 made of a coil spring or pipe and therefore can be protected from a shock from outside.

As shown in Figure 1 and others, a guard 155 for protecting the signal cable 103 and connecting cable 113 is provided between the sides of the frames 9 on the side on which the signal cable 103 and connecting cable 103 are extended out.

A foldable winding handle 156 is connected to the side of the drum 3, to rotate the drum 3, being provided on the opposite side to that out of which the signal cable 103 and connecting cable 113 extend. A handle holder 160 housing the insertable part winding handle 156 is provided below the drum 3.

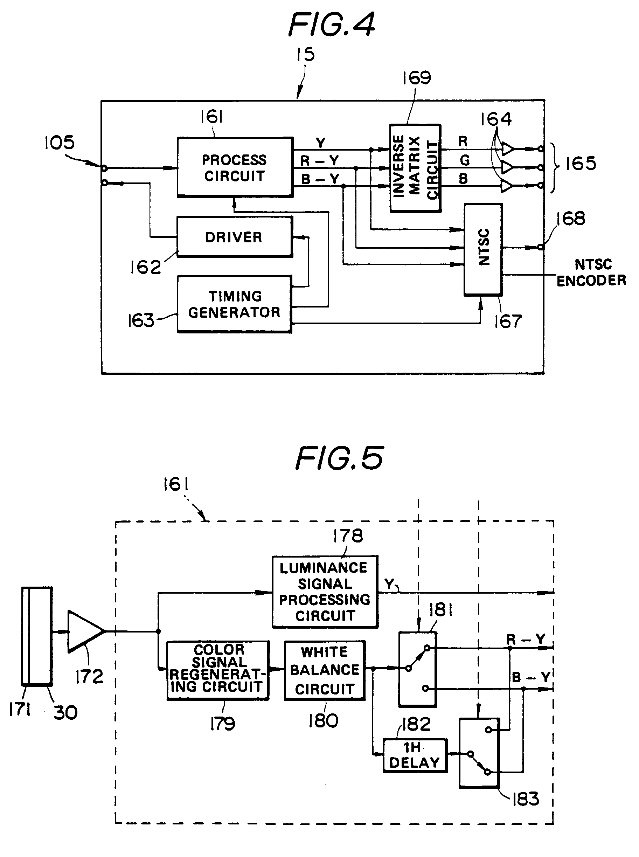

The video processor is formed, for example, as shown in Figure 4.

In the case of using a synchronous type colour imaging system, the video processor 15 is provided with a processing circuit 161 processing the output signal of the solid state imaging device 30 to be a video signal and a driver 162 applying a driving pulse to the solid state imaging device 30 which are connected to the connector receptacle 105. The output signal of the solid state imaging device 30 driven and read out by the driver 162 is amplified by a pre-amplifier and is then input into the process circuit 161 and, for example, a luminance signal Y and colour difference signals R-Y and B-Y are output. The luminance signal Y and colour difference signals R-Y and B-Y are fed into an NTSC encoder 167 to be converted to an NTSC system composite video signal, which is output out of an NTSC output stage 168. Also, the luminance signal Y and colour difference signals R-Y and B-Y are fed into an inverse matrix circuit 169 to be converted to colour signals R, G and B, which are fed out of a three-primary colour output stage 165 through a driver 164. The process circuit 161, driver 162 and NTSC encoder 167 are time-controlled by a timing generator 163. As shown In Figure 5, a colour filter array 171 in which colour filters transmitting respectively such colour lights as red (R), green (G) and blue (B) are arranged in the form of a mosaic or the like is provided on the front surface of the solid state imaging device 30.

The process circuit 161 is formed as shown, for example, in Figure 5.

The output signal of the solid state imaging device 30, amplified by the pre-amplifier 172, is input into a luminance signal processing circuit 178 and a luminance signal Y is produced in this luminance signal processing circuit 178. Also, the output signal of the solid state imaging device 30 is fed into a colour signal regenerating circuit 179 and colour difference signals R-Y and B-Y are produced in a time sequence in each horizontal line. These colour difference signals R-Y and B-Y are compensated for white balance in the white balance circuit 180, and fed directly into an analogue switch 181 on one hand, and are delayed by one horizontal line by a 1H delay line 182 and input into an analogue switch 183 on the other hand. The colour difference signals R-Y and B-Y are obtained from the analogue switches 181 and 183 switched by the switching signal of the timing generator 163.

The operation of this embodiment formed as above shall be explained in the following.

In using the endoscope apparatus 1 of this embodiment, the light source plug 120 provided at the tip of the connecting cable 113 is connected to the connector socket 116 of the light source apparatus 16 and the connector 106 provided at the tip of the signal cable 103 is connected to the connector socket 105 of the video processor 15. When the lamp 16a of the light source apparatus 16 is lighted, the illuminating light emitted from this lamp 16a will be incident upon the entrance end of the light guide 45 of fibres through the rod lens 122 of the light source plug 120. This illuminating light is led to the tip part 22 by the connecting cable 113, drum 3 and light guide 45 inserted through the insertable part 2, is emitted from the exit end of this light guide 45 and is radiated onto an object through the light distributing lens 44 and light distributing lens system 56. The component of this illuminating light returning from the object is made to form an image by the image forming optical system consisting of the lens system 54 and objective system 29, and is imaged by the solid state imaging device 30. The output signal of this solid state imaging device 30 is input into the video processor 15 through the signal line 33, plug 83, receptacle 96, slip ring brushes 95, fixed rings 93, signal lines 99, signal correcting circuit 98, signal line 101, connector 106 and connector socket 105 and is processed to be a video signal. The video signal produced by this video processor 15 is fed into the monitor 17 in which the observed image is displayed.

By rotating the drum 3, the insertable part 2 can be paid out or wound up and housed. When the drum 3 is rotated, the parts extended out of the side of the drum 3 of the connecting cable 113 connected to the rotary shaft part 5 of this drum and the light guide 45 inserted through this connecting cable 113 will also be rotated. The connecting cable 113 and light guide 45 of fibres are connected to the rotary mouthpiece 124 rotatable with respect to the light source apparatus 16 in the light source connector 120. Therefore, the torque of the drum 3 will be transmitted to the rotary mouthpiece 124 by the connecting cable 113 and this rotary mouthpiece will rotate following the rotation of the drum 3. Therefore, the entrance end side of the light guide 45 will also rotate following the rotation of the drum 3 and therefore this light guide 45 will not be twisted or broken.

According to this embodiment, as the drum 3, light source apparatus 16 and video processor 15 are separately provided, each of the drum 3, light source apparatus 16 and video processor 15 will be small and light, and the setting, carrying and utilisation will be significantly easier. Also, as the light source apparatus 16 and video processor 15 can be set in any place at will, the operability of the light source apparatus 16 and video processor will be improved.

If the form of the small diameter part 121a on the tip side of the light source connector 120 is made to conform to the standard of an existing light source apparatus, the existing light source can also be utilised.

Another method of obtaining a colour picture image, for example, is by a field sequential system, such various light sources as a light source wherein the illuminating light as emitted is switched to red (R), green (G) or blue (B), or a light source wherein light in another wavelength range outside that of visible light can be utilised.

Further, according to this embodiment, as the light guide 45 can be led to the light source apparatus 16 without being cut off on the way and relayed via butted end surfaces, there will be no loss of the light amount by relaying.

Also, in this embodiment, the connecting cable 113 through which the light guide 45 of fibres is inserted and the signal cable 103 through which the signal line 101 is inserted are led out on the same side of the drum 3. Therefore, as compared with the case that the connecting cable 113 and the signal cable 103 are led out respectively from both ends of the drum 3, the drum 3 housing space can be made smaller.

Further, the connecting cable 113 and signal cable 103 do not obstruct in carrying the drum 3, and the portability is improved.

In using the apparatus, as shown in Figure 1, the light source apparatus 16 and video processor 15 can be arranged, for example, as overlapped on one side of the drum 3, and the operability is improved.

Figures 12 and 13 show a second exemplary embodiment of the present invention.

In this embodiment, as shown in Figure 13, the signal line 101 connected to the signal correcting circuit 98 is inserted through the hollow part of the fixed shaft 91, is extended out of the side of the drum 3 and is led directly out of the bearing part 8, without being inserted back through the handle 11 to the other side.

Therefore, in this embodiment, the connecting cable 113 through which the light guide 45 is inserted and the signal cable 103 through which the signal line 101 is inserted are led respectively out of opposite sides of the drum 3.

The other formations and operations are the same as in the first embodiment.

The effects of this embodiment are the same as of the first embodiment, except for the fact that the connecting cable 113 and signal cable 103 are led out on the same side of the drum 3.

Figures 14 to 17 show the third embodiment of the present invention.

In this embodiment, as shown in Figures 14 and 15, the connecting cable 113 is covered on the outer periphery with a flexible hose 114. The hose 114 is fixed and connected at one end to the tube body 128 of the light source connector 120, for example, with screws 130 as shown in Figure 16 and at the other end to the housing 7a of the bearing part 7, fixed to the frame 9, for example, with screws as shown in Figure 15, so as not to rotate even if the drum 3 rotates.

In this embodiment, as shown in Figure 16, the connecting cable 113 is formed of a urethane tube 131 and a net pipe 132 covering it on the outer periphery. The light guide 45 is covered with a light guide fibre protective tube such as a silicon tube 133 on substantially all the parts, but is not covered with such a protecting tube at least in a range in which the connecting cable 113 requires a flexibility, as shown by L in Figure 15. Thus, as the light guide 45 is not covered with the protecting tube, even if the light guide 45 of fibres rotates while the connecting cable 113 is bent, the individual fibres of a fibre optic bunch will not be restricted in the movement by the protecting tube. Therefore, the respective element lines will be freely displaced and will be kept so low in surface pressure when rubbed with each other as to suffer little damage. Therefore, even if the light guide 45 rotates while bent, its life will be able to be kept long. The light guide 45 is painted with such anti-friction material as molybdenum.

As shown in Figure 17, a tube 190 for reducing the friction may be interposed between the hose 114 and connecting cable 113. Bearings or the like may be provided instead of this tube 190.

According to this exemplary embodiment, as the connecting cable 113 is not exposed, the rotation will be smooth without being obstructed.

The other formations, operations and effects are the same as in the first embodiment.

Figure 18 shows the fourth exemplary embodiment of the present invention.

In this embodiment, the light guide 45 in the entrance end part and the connecting cable 113 in the end part are connected and fixed to a light source connector 191. On the other hand, the connector socket 116 of the light source apparatus 16 is provided with a connector socket body 192 supported rotatably with respect to the light source apparatus 16 through bearings 193. The light source connector 191 can be inserted in and connected to the connector socket body 192.

In this embodiment, the connector 191 and connector socket body 192 rotate following the rotation of the drum 3.

The other formations, operations and effects are the same as in the first embodiment.

Figure 19 shows the fifth exemplary embodiment of the present invention.

In this embodiment, the signal line 101 is inserted through the frame 9 instead of the handle 11, and is led from the bearing part 8 on one side into the bearing part 7 on the other side.

The other formations, operations and effects are the same as in the first embodiment.

Figures 20 to 22 show the sixth exemplary embodiment of the present invention.

In this embodiment, a video processor 201 is provided within the drum 3.

As shown in Figure 22, the video processor 201 is fixed, for example, to the terminal plate 97 fixed to the fixed shaft 91. The signal line 99 from the slip ring 90 is connected to this video processor 201. A signal line 202 led out of the video processor 201 is inserted through the hollow part of the fixed shaft 91, led into the bearing part 7 on the other side through the handle 11 from the bearing part 8 on one side, extended out of this bearing part 8 and inserted via a video cable 203. This video cable 203 is provided with a connector 204 removable from the monitor 17.

A current source cord 205 for feeding electric power to the video processor 201 extends out of the bearing part 7 of the drum 3, and is provided with a plug 207 removable from the current source 206.

The formation of the video processor 201 is the same as of the video processor 15 shown, for example, in Figure 4 and may include the signal correcting circuit 98.

In this embodiment, the output signal of the solid state imaging device 30 is processed to be a video signal by the video processor 201, whose video signal is fed into the monitor 17 to give an observable image.

According to this embodiment, as the drum 3 and video processor 15 shown in the first to fifth embodiments are made integral, the portability of the endoscope system will improve.

In this embodiment, the electrical positions of the slip ring 90 and video processor 201 may be reversed, the video processor 201 being fixed to the drum 3 to rotate with the drum, and the signal line 33 connected to the video processor 201, the signal line from which is connected to the slip ring 90, and from this slip ring 90 through the video cable 203. Thus, the number of poles of the slip ring 90 can be decreased, and generally the output signals of the video processor 201 are far less than the output signals.

The connecting cable 113 may be covered by a hose 114, but need not be.

The other formations, operations and effects are the same as of the first embodiment.

Figures 23 to 25 show the seventh exemplary embodiment of the present invention.

In this embodiment, as shown in Figure 24, instead of the solid state imaging device 30, an optical film image guide 211 is fitted through the insertable part 2, and arranged to have its end-face in the image plane of the objective lens system 29, and at the base end extends into the drum 3 as shown in Figure 25. A composite imaging apparatus 215 with a television camera 212 so that an observed image formed by the objective system 29 and transmitted by the image guide 211 may be imaged to the television camera 212 which has an image forming lens 216 forming an image of the light emitted from the exit end of the image guide 211, and a solid state imaging device 217 arranged in the image forming plane of this lens 216. The solid state imaging device 217 is driven by the video processor 213 and the output signal of the solid state imaging device 217 is processed to be a video signal by the video processor 213. The formation of the video processor 213 is the same as that of the video processor 15 shown, for example, in Figure 4.

A signal line 218 led out of the video processor 213 is connected to the slip ring 90, a signal line 219 led from this slip ring 90 is inserted through the hollow part of the fixed shaft 91, into the bearing part 7 on the other side through the handle 11 from the bearing part 8 on one side, and is inserted through the video cable 203 extended out of this bearing part 7. The signal line 219 is connected to the monitor 17 through the connector 204. The appearance of this embodiment is, as shown in Figure 20, the same as in the sixth embodiment.

In this embodiment, the observed image formed by the objective system 29 and transmitted by the image guide 211 of fibres is imaged by the television camera 212, processed to be a video signal by the video processor 213, and displayed in the monitor 17.

According to this embodiment, as the image guide 211 is used without providing the solid state imaging device 30 in the tip part 22 of the insertable part 21, as compared with the case of using the solid state imaging device 30, the tip 22 of the equipment is more environment-proof.

The other formations, operations and effects are the same as in the sixth embodiment.

Figures 26 and 27 show the eighth exemplary embodiment of the present invention.

In this embodiment, as in the first to seventh embodiments, the light source apparatus 16 is provided separately from the drum 3 and the process circuit 221 processing the output signal of the solid state imaging device 30 so as to be a video signal is provided within the drum 3. In this embodiment, a synchronous system is used for the colour imaging system. A colour filter array, in which colour filters transmitting respectively such colour lights as red (R), green (G) and blue (B) are arranged in the form of a mosaic or the like, is provided in front of the solid state imaging device.

As shown in Figure 27, the output signal of the solid state imaging device 30 is input into the process circuit 221 through the signal line 33 and the slip ring 90 within the drum 3. A video signal is produced by this process circuit 221, is converted to a high frequency wave, such as a UHF band signal, by an RF modulator 222 provided within the drum 3, and is emitted as an electromagnetic wave from an antenna 223 fitted to the drum 3, as shown in Figure 26. This wave is received by an antenna 226, for example, of an ordinary television receiver 225 and is demodulated by this television receiver 225 and an observed image displayed.

The process circuit 221 is formed as shown, for example, in Figure 27.

The output signal of the solid state imaging device 30 is input into a γ-correcting circuit 231. The signal γ-corrected by this γ-correcting circuit 231 is input into a low-pass filter (LPF) 232 to obtain a luminance signal Y_{H} of a side band, is input into a low-pass filter 233 to obtain a luminance signal Y_{L} of a narrow band and is input into a colour separating circuit 234 to separate out a colour difference signal component (or colour signal component). The colour difference signal (or colour signal component) is divided into two colour difference signals (or colour signals) by a synchronising circuit 235 and is adjusted for white balance in response to the level of the luminance signal Y_{L} of the narrow band by the white balance circuit. The luminance signal Y_{H} of the wide band and the colour difference signal through the white balance circuit 236 are input and mixed in an encoder 237 to produce a so-called composite video signal Including a synchronous signal, for example, of an NTSC system. This video signal is fed into the RF modulator 222.

Thus, in this embodiment, the video signal is transmitted and received by the electromagnetic wave between the endoscope apparatus provided with the drum 3 having the insertable part 2, the solid state imaging device 30, the process circuit 221 and the light source apparatus 16 separate from this drum 3 and the television receiver 225. Therefore, it is not necessary to couple the endoscope apparatus (drum 3) to the television receiver 225, and the television receiver 225 can be freely arranged in any position, and easily moved without pulling a long cable.

The absence of any cable between the endoscope apparatus (drum 3) and television receiver 225 leaves the room or working area uncluttered, and avoids damage when moving other devices or catching feet, which could break the cable and connector and to make the observation impossible.

Further, in housing and moving the endoscope apparatus, no long cable need to be handled and the operation is simplified.

When an FM modulated wave is used to transmit and receive a video signal between the endoscope apparatus and television receiver 225, the external noise will hardly have any influence, and the endoscope inspection will be easy, even at sites subject to many noises, as within a factory.

As in the first embodiment, the video processor 15 may be provided separately from the drum 3 and signals may be transmitted and received between the drum 3 and video processor 15 or between the video processor 15 and monitor 17 by using electromagnetic waves. Also, as in the seventh embodiment, in imaging with the television camera 212, signals may be transmitted and received between the video processor 213 and monitor 17 by using electromagnetic waves.

The other formations, operations and effects are the same as in the first embodiment.

Figures 28 to 32 show the ninth exemplary embodiment of the present invention.

In this embodiment, a video analyser 301 containing the light source apparatus 16 and video processor 15 is provided separately from the drum 3.

As shown in Figure 30, the signal line 33 connected to the solid state imaging device 30 is led into the drum 3, is then inserted through the central hole 111 of the rotary shaft part 5, and extended in the rotary shaft direction out of the bearing part 7. The light guide 45 is led into the drum 3, inserted through the central hole 111 of the rotary shaft part 5, and extended in the rotary shaft direction out of the bearing part 7 together with the signal line 33.

The signal line 33 and the light guide 45 in the parts extended out of the side of the drum 3 are inserted through the connecting cable 113 having a flexibility. A light source connector 310 containing a slip ring and removably connectable to a connector receptacle 302 of the video analyser 301 is provided in the end parts of the signal line 33, light guide 45 and connecting cable 113.

The connecting cable 113 in the base end is connected to the rotary shaft part 5 by a nut 145'. Therefore, this connecting cable 113 rotates together with the rotation of the drum 3. The connecting cable 113 is covered with the flexible hose 114 which is fixed and connected in the base end part to the housing 7a of the bearing part 7 fixed to the frame 9, for example, by screws. Therefore, even if the drum 3 rotates, this hose 114 will not rotate.

On the other hand, the light source connector 310 is formed as shown in Figures 31 and 32.

The light source connector 310 has a substantially tubular fixing member 311 and a substantially tubular rotary member 313 rotatably supported through bearings 312 inside this fixing member 311. The rotary member 313 has a small diameter part 313a on the tip side. The light guide 45 is inserted in the entrance end part into this small diameter part 313a and is fixed, for example, by screws. When the light source connector 310 is inserted into the connector receptacle 302 of the video analyser 301, the entrance end of the light guide 45 will be opposed to the lamp 16a of the light source apparatus within the video analyser 301 with the optical axes coinciding with each other.

The rotary member 313 is provided on the outer periphery with a plurality (n) of rings 315 which form a slip ring 314, and to which the signal lines 33 are connected. The fixed part 311 is provided with a plurality of terminals 316 corresponding to the rings 315. Brushes 317 in contact with these terminals 316 are in electrical contact with the rings 315.

On the connector socket 302 side of the video analyser 301, a plurality of contacts 318 corresponding to the terminals 316 are provided to electrically contact the terminals 316, and are connected to the video processor 15.

As shown in Figure 32, the fixed member 311 is provided on the outer periphery with a positioning pin 320 for positioning and rotation prevention, to be engaged with a groove 321 formed in the connector receptacle 302.

The connecting cable 113 is fixed to the rotary member 313, for example, with a screw through the connecting ring 323. The hose 114 is fixed to the fixing member 311, for example, with screws.

Therefore, the signal line 33, light guide 45, connecting cable 113 and rotary member 313 will rotate together with the rotation of the drum 3, but the hose 114 and fixed member 311 will not rotate, even if the drum 3 rotates.

The other formations are the same as in the first embodiment.

In this embodiment, when the light source connector 310 provided at the end of the connecting cable 113 is connected to the connector socket 302 of the video analyser 301, and the lamp 16a of the light source apparatus 16 within this video analyser 301 is lighted, the illuminating light from this lamp 16a will be incident upon the entrance end-face of the light guide 45. This illuminating light is led to the tip part 22 by the light guide 45 inserted through the connecting cable 113 and insertable part 2, emitted from the exit end-face of the light guide 45 and radiates onto an object through the light distributing lens.

The light returning from the object due to this illuminating light is made to form an image by the image forming optical system, and is imaged by the solid state imaging device 30, which is connected to the video processor 15 within the video analyser 301 through the signal line 33 and the slip ring 314 within the light source connector 310. The video signal from the video processor 15 is input into the monitor 17 and an observed image is displayed on this monitor 17.

According to this embodiment, the drum 3 and video analyser 301 can be connected with each other through one connecting cable 113 and the operational efficiency of the system is improved.

The other operations and effects are the same as in the first embodiment.

Figures 33 to 37 show the tenth exemplary embodiment of the present invention.

This embodiment is substantially the same as the ninth embodiment but the colour imaging system is replaced with a synchronous system so as to be of a field sequential type.

As shown in Figures 33 and 34, the light source apparatus 16 within the video analyser 301 has a lamp 330 driven by a lamp lighting circuit 337 to emit a white light, and a condenser lens 331 directs the condensed light to be incident upon the entrance end-face of the light guide 45. A rotary filter 333 rotated and driven by a motor 332 is arranged on the illuminating light path between the lamp 330 and condenser lens 331. In this rotary filter 333, three fan-like apertures are provided in the peripheral direction on a disc-like rotary plate 334, and a red transmitting filter 333R, green transmitting filter 333G and blue transmitting filter 333B are fitted to the respective apertures. The motor 332 is controlled in the rotation by a control circuit 335 provided within the video analyser 301. The light emitted from the lamp 330 is transmitted through the rotary filter 333 and is separated in time-sequential manner into lights in the respective wavelength ranges of red, green and blue. These lights are incident upon the entrance end of the light guide 45 and these field sequential illuminating lights are radiated onto an object.

The video processor 15 within the video analyser 301 has a driver 341 driving the solid state imaging device 30 and a video signal processing circuit 342 processing the output signal of the solid state imaging device so as to be a video signal connected to the solid state imaging device 30 through the signal line 33 and slip ring 314 within the light source connector 310. The output signal of the solid state imaging device 30 driven and read out by the driver 341 is processed by the video signal processing circuit 342 and the video signal produced by this video signal processing circuit 342 is input into the monitor 17 to colour-display an observed image. The driver 341 and video signal processing circuit 342 are controlled in time and the like by the control circuit 33.

The video signal processing circuit 342 is formed as shown, for example, in Figure 36.

The video signal processing circuit 342 is provided with a process circuit 350 processing the output signal of the solid state imaging device 30 so as to be a video signal. The output signal of the solid state imaging device 30 is amplified by a pre-amplifier 349 and is then input into the process circuit 350 and signals imaged respectively under field sequential lights, for example, of R, G and B, to be output as colour signals R, G and B. The respective colour signals R, G and B are output as three primary colour signals RGB respectively from three primary colour output ends 352, through drivers 351. Also, the colour signals R, G and B are transmitted through a matrix circuit 353 to produce a luminance signal Y and colour difference signals R-Y and B-Y, are then input into an NTSC encoder 354 and converted to a composite video signal of an NTSC system to be output from an NTSC output stage 355. The process circuit 350 and NTSC encoder 354 are controlled in the timing by the control circuit 335.

The process circuit 350 is formed as shown, for example, in Figure 37.

The output signal of the solid state imaging device 30 input through the pre-amplifier 349 is sample-held by the sample holding circuit 361, is then γ-corrected by the γ-correcting circuit 362 and is converted to a digital signal by an A/D-converter 363. Through a multiplexer 364 switched by the signal of the control circuit 335, the signals imaged under the field sequential lights of R, G and B are written respectively into an R frame memory 365R, G frame memory 365G and B frame memory 365B. These respective frame memories 365R, 365G and 365B are simultaneously read out, converted to respective analogue colour signals R, G and B by D/A-converters 366, and form output signals.

According to this embodiment, the size of the field sequential type solid state imaging device 30 to obtain the same resolution as in the synchronous type may be smaller (fewer pixels) than the size of the synchronous type solid state imaging device and the tip part 22 of the insertable part 2 can be made smaller.

The other formations, operations and effects are the same as in the ninth embodiment.

Figures 38 to 40 show the eleventh exemplary embodiment of the present invention.

In this embodiment, as in the seventh embodiment, the image guide 211 is inserted through the insertable part 2. A hollow rotary shaft part 372 supported rotatably by the bearing part 8 through a bearing 371, and rotating together with the rotation of the drum 3, is provided in one end part of the drum 3 and the image guide 211 of fibres in the base end part is led into the drum 3 and inserted in and fixed to the rotary shaft part 372. An eyepiece 374 is fitted to the outside end of the hollow part of the rotary shaft part 372 as opposed to the end surface of the image guide 211 of fibres so that a naked eye observation may be made through this eyepiece 374.

A connecting part 375, which can be fitted with an imaging apparatus 380 or the like, is provided in the centre of the side of the bearing part 8. In this imaging apparatus 380, for example, as in the imaging apparatus 215 of the seventh embodiment, the television camera 212 and video processor 213 are made integral so that an observed image from the eyepiece 374 may be displayed. The video signal output from this imaging apparatus 380 is input into the monitor 17 to display the observed image.

The connecting part 375 can be fitted not only with the imaging apparatus 380 but also a still camera 382 such as is shown in Figure 39, and visual display aid apparatus (also called a lecturescope) as is shown in Figure 40. The still camera 382 is provided with an image forming lens 383 forming the image of the light from the eyepiece 374 and a film arranged in the image plane of this image forming lens. The visual aid apparatus 390 is provided, for example, with a first eyepiece part 394 having a lens 391 condensing the light from the eyepiece 374, such light beam-splitting means dividing the light having passed through this lens 391 into two as, for example, a semi-silvered mirror 392 and a first eyepiece 393, provided on one light path divided by this mirror 392 and a second eyepiece part 399 having an image forming lens 396 and a second eyepiece 398 connected and provided through an image guide 397 on the other light path divided out by the mirror 392, so that a naked eye observation may be simultaneously made with the first eyepiece part 394 and second eyepiece part 399. The imaging apparatus 380 or still camera 382 may be connected to the first eyepiece part 394 or second eyepiece part 399 of the visual aid apparatus 390.

In this embodiment, the light guide 211 in the base end part may be extended out of the side of the drum 3 to provide an eyepiece part, or a connecting part connectable with a television camera or the like may be provided.

The other formations, operations and effects are the same as in the seventh embodiment.

Figure 41 shows the twelfth exemplary embodiment of the present invention.

In this embodiment, as also for example in the seventh embodiment, the light is transmitted by a photocoupler as a means of transmitting the imaging signal from the rotary side to the fixed side, in imaging with the imaging apparatus 440 the observed image transmitted by the image guide 211.

A light-emitting device 451 forming a photocoupler 450 is arranged in the rotation centre part within the drum 3, fixed to the drum 3 by a fixing member 441 and driven by a driving circuit 442 into which the output signal of the imaging apparatus 440 is input through a signal cable 443.

A light-receiving device 452 forming the photocoupler 450 is arranged coaxially as opposed to the light-emitting device 451, and is secured to a stationary shaft 445 fixed to the bearing part 8, so as not to rotate even if the drum 3 rotates. Slip rings 446 are provided on the periphery of the outer peripheral part of the fixed shaft 445. Contacts 447 contacting these slip rings 446 are provided opposed to the slip rings 446 in the fixed member 441. When the drum 3 rotates, the contacts 447 will rotate, but will always be in contact with the slip rings 446 which are on the periphery of the fixed shaft 445. These slip rings 446 and contacts 447 are used to feed electrical power to the imaging apparatus 440 and driving circuit 442 through cables 448 and 449. An electrical power supply and signal transmitting cable 455 connected to the slip rings 446 and light-receiving device 452 is inserted through the signal cable 103 through the fixed shaft 445 and handle 11 and connected to the video processor 15.

In this embodiment, electrical power is fed to the imaging apparatus 440 and driving circuit 442 through the slip rings 446, contacts 447 and cables 448. The observed image transmitted by the image guide 211 is imaged by the imaging apparatus 440. The output signal of this imaging apparatus 440 is fed into the driving circuit 442 through the signal cable 443 and converted to an optical signal by the light-emitting device 451 driven by this driving circuit 442. The optical signal from this light-emitting device 451 is received by the light-receiving device 452 and is converted to an electric signal which is input into the video processor 15. The video signal from this video processor 15 is fed into the monitor 17 and the observed image displayed.

According to this embodiment, the video signal, which is a high-frequency wave likely to be influenced by noise, is transmitted with no contact from the rotary side to the fixed side by using the photocoupler 450, and is therefore less likely to be influenced by the noise than if using slip rings for coupling.

The other formations, operations and effects are the same as in the seventh embodiment.

A photocoupler may be used instead of the slip rings in the other embodiments described.

Figures 42 and 43 show the thirteenth exemplary embodiment of the present invention.

In this embodiment, as in the first embodiment, respective rollers 13 are rotatably fitted so as to be opposed to the peripheral surface of the drum 3 on the frames 9 and handle 11. As shown in Figure 42, the insertable part 2 is inserted between the peripheral surface of the drum 3 and the rollers 13 and is wound up on the drum 3. It is preferable to provide at least three of the rollers 13 so that the defined circle internally contacting the rollers 13, that is, the circle formed by the wound insertable part 2, may be limited to one.

Figure 43 shows the vicinity of the roller 13 fitted to the handle 11. As shown in this drawing, a shaft 462 is provided in a position opposed to the outer peripheral part of the drum 3 between both sides of the handle 11 and is fitted rotatably with the roller 13. Male screw-threads are formed on both end parts of the shaft 462, pass through both side parts of the handle 11 and are fixed to the handle 11 with nuts 465. Collars 464 are interposed between both end parts of the roller 13 and the handle so as to regulate the axial movement of the roller 13. Though not illustrated, in the same manner, the roller 13 fitted to the frame 9 is also rotatably fitted through bearings 463 to the shaft provided between both side parts of the frame 9. The bearings 463 are not always required and the roller 13 and shaft 462 may be in direct sliding contact with each other.

Flanges 468 for preventing the insertable part 2 from dropping are provided on the outer peripheral sides of both end parts of the drum 3. As shown in Figure 43, the gap 469 between the roller 13 and the flange 468 of the drum 3 is set to be smaller than the outside diameter d of the insertable part 2 so as to prevent the insertable part 2 from dropping out of the drum 3.

As shown in Figure 42, the frames 9 and handle 11 are fitted respectively with cable housing hooks 461 for winding and housing the connecting cable 113 through which the light guide 45 is inserted and the signal cable 103 in the end parts of the connecting cable and signal cable.

Also, a guard 155 projecting outside the cable housing hooks 461 is provided on the sides of the frames 9 to protect the connecting cable 113 and signal cable 103 when the connecting cable 113 and signal cable 103 are wound up and housed on the cable housing hooks 461.

In this embodiment, the insertable part 2 is inserted between the outer peripheral part of the drum 3 and the rollers 13 and is wound up and housed on the drum 3 so as to regulate the expansion in the outer peripheral direction of the insertable part 2 wound up by the rollers 13. Therefore, even in cases where the flexibility of the insertable part 2 is low, the wound insertable part 2 will not expand in the outer peripheral direction due to the bending rigidity of the insertable part 2. The diameter of the drum 3 can be made that much smaller, the insertable part 2 and drum unit including the drum 3 can be made small and light, and the portability is improved.

In this embodiment, when the drum unit is not in use, as shown in Figure 42, the connecting cable 113 and signal cable 103 can be wound up and housed on the cable housing hooks 461. Therefore, when the drum 3 is carried or stored, the connecting cable 113 and signal cable 103 will not be in the way. Thus, the portability is improved and the storing space can be made small.

Further, in this embodiment, as shown in Figure 42, when the connecting cable 113 and signal 103 are wound up and housed on the cable housing hooks 461, the connecting cable 113 and signal cable 103 will be protected by the guard 155. A long endoscope is often used to inspect a pipe or the like in an industrial plant. When the drum unit is carried, it may collide with the pipe or a structure such as a pillar. According to this embodiment, in such collision, the connecting part particularly with the bearing part 7 of the connecting cable 113 and signal cable 103 will be prevented from being broken. Further, if the drum unit should fall down or the like, the connecting cable 113 and signal cable 103 will be protected.

In this embodiment, the roller 13 is used as a preventative member for restraining expansion of the insertable part 2, but a preventative member for preventing the insertable part 2 from expanding in the outer peripheral direction may not only be the roller 13, but also a non-rotatable rod or the like.

The other formations, operations and effects are the same as in the first embodiment.

Figure 44 shows the fourteenth exemplary embodiment of the present invention.

In this embodiment, the roller as a preventing member is energised to the drum 3 side.

Two pressing rods 472 are fixedly directed towards the drums 3, inside the straight part 471 of the carrying handle 11 opposed to the outer periphery of the drum 3. Respective pressing cylinders 473 are slidably fitted externally to the end parts on the drum 3 side of the pressing rods 472. A respective spring 474 energising the pressing cylinder 473 towards the drum 3 is contained within the hollow part 473a of each pressing cylinder 473. A shaft 475 is provided between the end parts on the drum 3 side of the pressing cylinders 473 and is fitted rotatably with a roller 476 so that the flexible insertable part 2 may be held between the roller 476 and the outer periphery of the drum 3 and wound up on the drum 3.

Though not illustrated, rollers energised towards the drum 3 may also be fitted respectively to the frames 9 in the same manner.

The other formations are the same as in the thirteenth embodiment.

According to this embodiment, the insertable part 2 can be better prevented from expanding in the outer peripheral direction and can be wound up on the drum 3.

In this embodiment, energising of the roller 476 may not be provided by the spring 474, but by rubber or any other elastic material.

The structure energising the roller 476 towards the drum 3 may not be the one shown in Figure 44, but the roller 476 fitted between pressing rods energised by pressure cylinders, or a roller fitted through plate springs between both side parts of the handle 11.

The roller 476 is used as a restraining member but the member preventing the insertable part 2 from expanding in the outer peripheral direction may not only be the roller 476, but also a non-rotatable rod or the like.

The other operations and effects are the same as in the thirteenth embodiment.

In the thirteenth and fourteenth embodiments, the restraining member may not be the roller or rod but a cylindrical member opposed to substantially all the outer periphery of the drum 3.

The present invention can be applied not only to an industrial endoscope but also a medical endoscope.

As explained above, according to the present invention, in an endoscope apparatus wherein the insertable part can be wound up and housed on a drum, there are effects that the drum can be made light and small and the portability, workability and ease of operation can be improved.

In this invention, it is apparent that working modes different in a wide range can be formed on the basis of this invention. This invention is not restricted by its specific working mode except being limited by the appended Claims.

In particular, where the facility for a processing channel or tool insertion passage is required in the insertion part 2, this may be provided, with a further access port positioned in the drum in like manner to that of the light guide. The inevitable increase in size and loss of flexibility may call for the use of a larger drum in some cases, but the advantages of the invention will not be lost, even though some may be reduced in a practical comparison with the embodiments described above.

## Claims

1. An endoscope apparatus comprising:
an elongated flexible insertable member (2) having an illuminating window (53) and an observing window (25) at its distal end (22);
a winding drum (3) to which is fixed the proximal end of said insertable member, and which is capable of winding up and housing said insertable member, said winding drum comprising a hollow rotary axis (5, 6) and being rotatably supported by a supporting frame (9);
a light source apparatus (16) provided separately from said winding drum (3) for supplying illuminating light to said illuminating window (53);
an observing means (17) for receiving light from an object incident on said observing window;
an optical fibre bundle (45) for transmitting said illuminating light from said light source apparatus (16) to said illuminating window (53) and which extends within said insertable member (2) and has at one end a tip disposed adjacent said illuminating window, characterised in that said optical fibre bundle comprises, at the other end, a part which extends from said insertable member, leads into said hollow rotary axis (5) from the inside of said winding drum, and further extends axially out of one side of said winding drum (3), the end of said extended part being connected to said illuminating light source apparatus (16) to allow illuminating light to enter said optical fibre bundle (45), and in that a rotary connecting means (120) is provided for rotatably connecting the end of that part of the optical fibre bundle extending from the drum (3) to said illuminating light source apparatus (16).

2. An endoscope apparatus according to Claim 1 characterised in that a hollow first covering member (113) is provided to house the part of said optical fibre bundle (45) which extends axially out of said one side of said winding drum (3).

3. An endoscope apparatus according to Claim 2 characterised in that said first covering member (113) is fixed to said winding drum (3) and said rotary connecting means (120) is provided with a rotary part (124) connected to said optical fibre bundle (45) and to said first covering member (113) and a holding part (120) rotatably holding said rotary part (124) and connected to said light source apparatus (16).

4. An endoscope apparatus according to Claim 3 characterised by further comprising a second covering member (114) covering said first covering member (113).

5. An endoscope apparatus according to Claim 4 characterised in that said second covering member (114) is fixed at the winding drum end to a part (7) of said supporting frame of said winding drum (3) and is fixed at the opposite end to the holding part (129) of said connecting means (120).

6. An endoscope apparatus according to Claim 5 characterised in that a means (190) for reducing friction between said first covering member (113) and said second covering member (114) is further provided between said first covering member and second covering member.

7. An endoscope apparatus according to Claim 2 characterised in that one end of said first covering member (113) is fixed to said winding drum (3) and said rotary connecting means (120) is provided with a rotary part connected to said optical fibre bundle (45) and to the opposite end of said first covering member (113) and a holding part for holding said rotary part is provided rotatably with the axial direction as a centre of rotation in said light source apparatus.

8. An endoscope apparatus according to Claim 1 characterised in that said observing means has an imaging means (30) for receiving and imaging the light from an object incident on said observing window, a signal processing means (15) for processing the signals provided by said imaging means and a displaying means (17) for receiving a video signal output from said signal processing means (15) and displaying the object image.

9. An endoscope apparatus according to Claim 1 characterised in that said observing means has an imaging means (30) for receiving and imaging the light from an object incident on said observing window (25), a signal processing means (15) for processing the signals provided by said imaging means, a signal connecting means (101) connecting said imaging means (30) and said signal processing means (15) with each other and a displaying means (17) for receiving a video signal output from said signal processing means (15) and displaying the object image and wherein an external apparatus integrates said light source apparatus (16) and a video signal processing apparatus comprising said signal processing means.

10. An endoscope apparatus according to Claim 9 characterised in that said signal connecting means (101) is provided with a first signal line (33) connected to said imaging means (30), a second signal line (101) extended in the axial direction out of the side of said winding drum (3) and connected to said signal processing means (15), and rotary electric contacts (90) within said winding drum (3) to electrically connect said first signal line (33) and second signal line (101) with each other.

11. An endoscope apparatus according to Claim 9 characterised in that said signal connecting means (101) is led out of said one side of said winding drum (3).

12. An endoscope apparatus according to Claim 11 characterised in that said supporting frame rotatably supporting said winding drum has a pipe (11) extending from said one side of the axis of the winding drum (3) radially beyond the perimeter of the winding drum then extending paraxially past the winding drum and finally extending radially inwardly to the other side of the axis of the winding drum, and said signal connecting means (101) is inserted through said pipe from said other side of said winding drum (3), is led to said one side of said winding drum and is led to said signal processing apparatus (15) out of said one side.

13. An endoscope apparatus according to Claim 8 characterised in that a signal correcting circuit (98) for at least one of said imaging means (30) and said signal processing means (15) is provided within said winding drum (3).

14. An endoscope apparatus according to Claim 8 characterised in that said imaging means (30) has an image forming optical system (29) for forming an image from the light incident on said observing window (25) and a solid state imaging device (30) arranged in the image forming position of said image forming optical system (29).

15. An endoscope apparatus according to Claim 8 characterised in that said signal processing means (98) is provided within said winding drum (3).

16. An endoscope apparatus according to Claim 15 characterised in that a signal cable (101) extends out of the side of said winding drum (3), connecting said signal processing means (15) and said displaying means (17) with each other.

17. An endoscope apparatus according to Claim 8 characterised in that said imaging means (30) has an image forming optical system (29) for forming an image from the light incident on said observing window (25), an image transmitting means (211) inserted through said insertable member (2) for transmitting the image formed by said image forming optical system (29) to said winding drum (3) and an imaging apparatus (217) for imaging the image transmitted by said image transmitting means (211).

18. An endoscope apparatus according to Claim 8 characterized in that a signal transmitting means (33) for transmitting a picture Image information signal from said imaging means (30, 217) and a signal receiving means (15, 213) for receiving said picture image information signal transmitted from said signal transmitting means (33) and transmitting it to said displaying means (17) are provided between said imaging means (30, 217) and said displaying means (17).

19. An endoscope apparatus according to Claim 8 characterised in that a photocoupler for transmitting and receiving a signal between said imaging means (30) and said displaying means (17) by using a light is provided within said winding drum (3).

20. An endoscope apparatus according to Claim 9 characterised by further comprising a connecting means (90) for connecting rotatably, with the axial direction of the winding drum (3) as a centre of rotation, said signal connecting means (101) to said signal processing means (15).

21. An endoscope apparatus according to Claim 20 characterised by further comprising a hollow covering member (103, 113) housing parts of said optical fibre bundle (45) and the signal connecting means (101) which are extended out of the side of said winding drum (3).

22. An endoscope apparatus according to Claim 21 characterised in that one end of said covering member (113) is fixed to said winding drum (3) and a single connecting means (310) is provided with a rotary part (313) connected to said fibre bundle, said signal connecting means (33) and the other end of said first covering member including a holding part (311) rotatably holding said rotary part (313) and connected to said light source apparatus (330) and signal processing apparatus which are combined together.

## Patentansprüche

1. Endoskopiegerät, mit:
einem langgestreckten flexiblen einführbaren Bauteil (2), das an seinem distalen Ende (22) ein Beleuchtungsfenster (53) und ein Beobachtungsfenster (25) aufweist;
einer Wickeltrommel (3), an welcher das proximale Ende des einführbaren Bauteils befestigt ist und welche fähig ist, das einführbare Bauteil aufzuwickeln und zu verwahren, wobei die Wickeltrommel eine hohle Rotationsachse (5,6) umfaßt und von einem Stützrahmen (9) abgestützt wird;
einer Lichtquelleneinrichtung (16), die getrennt von der Wickeltrommel (3) vorgesehen ist, um ein Beleuchtungslicht zu dem Beleuchtungsfenster (53) zu liefern;
einem Beobachtungsmittel (17) zur Aufnahme des Lichts von einem Objekt, das in dem Beobachtungsfenster vorkommt;
einem Bündel optischer Fasern (45) zum Übertragen des Beleuchtungslichts von der Lichtquelleneinrichtung (16) zu dem Beleuchtungsfenster (53), und welches sich innerhalb des einführbaren Bauteils (2) erstreckt und an einem Ende eine Spitze hat, die benachbart zu dem Beleuchtungsfenster angeordnet ist,
dadurch gekennzeichnet,
daß das Bündel optischer Fasern an dem anderen Ende einen Teilbereich umfaßt, welcher sich von dem einführbaren Bauteil erstreckt, von der Innenseite der Wickeltrommel in die hohle Rotationsachse (5) hineinführt und sich weiterhin axial aus einer Seite der Wickeltrommel (3) herauserstreckt, wobei das Ende des sich herauserstreckenden Teilbereichs mit der Beleuchtungs-Lichtquelleneinrichtung (16) verbunden ist, um dem Beleuchtungslicht das Eintreten in das Bündel optischer Fasern (45) zu gestatten, und
daß ein rotierbares Verbindungsmittel (120) vorgesehen ist zur rotierbaren Verbindung des Endes von dem Teil des Bündels von optischen Fasern, welche sich von der Trommel (3) erstrecken, mit der Beleuchtungs-Lichtquelleneinrichtung (16).

2. Endoskopiegerät nach Anspruch 1, dadurch gekennzeichnet,
daß ein hohles erstes Verkleidungsbauteil (113) vorgesehen ist, um denjenigen Teil des Bündels optischer Fasern (45) zu verkleiden, welcher sich axial aus der einen Seite der Wickeltrommel (3) heraus erstreckt.

3. Endoskopiegerät nach Anspruch 2, dadurch gekennzeichnet,
daß das erste Verkleidungsbauteil (113) an der Wickeltrommel (3) befestigt ist und daß das rotierbare Verbindungsmittel (120) mit einem Rotationsteil (124) vorgesehen ist, welches an dem Bündel optischer Fasern (45) und dem ersten Verkleidungsbauteil (113) befestigt ist, und daß ein Halteteil (120) den Rotationsteil (124) rotierbar und mit der Lichtquelleneinrichtung (16) verbunden hält.

4. Endoskopiegerät nach Anspruch 3, weiterhin gekennzeichnet durch ein zweites Verkleidungsbauteil (114), welches das erste Verkleidungsbauteil (113) verkleidet.

5. Endoskopiegerät nach Anspruch 4, dadurch gekennzeichnet,
daß das zweite Verkleidungsbauteil (114) an dem Ende der Wickeltrommel an einem Teil (7) des Stützrahmens von der Wickeltrommel (3) befestigt ist und daß es an dem gegenüberliegenden Ende an dem Halteteil (129) des Verbindungsmittels (120) befestigt ist.

6. Endoskopiegerät nach Anspruch 5, dadurch gekennzeichnet,
daß weiterhin ein Mittel (190) zur Reduzierung der Reibung zwischen dem ersten Verkleidungsbauteil (113) und dem zweiten Verkleidungsbauteil (114) zwischen dem ersten Verkleidungsbauteil und dem zweiten Verkleidungsbauteil vorgesehen ist.

7. Endoskopiegerät nach Anspruch 2, dadurch gekennzeichnet,
daß ein Ende des ersten Verkleidungsbauteils (113) an der Wickeltrommel (3) befestigt ist und daß das rotierende Verbindungsmittel (120) vorgesehen ist mit einem Rotationsteil, welcher an dem Bündel optischer Fasern (45) und dem gegenüberliegenden Ende des ersten Verkleidungsbauteils (113) befestigt ist und daß ein Halteteil zum Halten des Rotationsteils in axialer Richtung als Rotationsmittelpunkt in der Lichtquelleneinrichtung vorgesehen ist.

8. Endoskopiegerät nach Anspruch 1, dadurch gekennzeichnet,
daß das Beobachtungsmittel ein Abbildungsmittel (30) zur Aufnahme und Abbildung des Lichts von dem Objekt, welches in dem Beobachtungsfenster vorkommt, aufweist, daß es ein Signalverarbeitungsmittel (15) aufweist zur Verarbeitung der Signale, welche durch das Abbildungsmittel geschaffen werden und daß es ein Darstellungsmittel (17) aufweist zur Aufnahme einer Video-Signalausgabe von dem Signalverarbeitungsmittel (15) und zur Darstellung eines Objektbildes.

9. Endoskopiegerät nach Anspruch 1, dadurch gekennzeichnet,
daß das Beobachtungsmittel ein Abbildungsmittel (30) zur Aufnahme und Abbildung des Lichts von dem Objekt, welches in dem Beobachtungsfenster vorkommt, aufweist, daß es ein Signalverarbeitungsmittel (15) aufweist zur Verarbeitung der Signale, welche durch das Abbildungsmittel geschaffen werden, daß es ein Signalschaltungsmittel (101) aufweist, welches das Abbbildungsmittel (30) und das Signalverarbeitungsmittel (15) miteinander verbindet und daß es ein Darstellungsmittel (17) aufweist zur Aufnahme einer Video-Signalausgabe von dem Signalverarbeitungsmittel (15) und zur Darstellung eines Objektbildes und worin eine externe Einrichtung die Lichtquelleneinrichtung (16) und eine Videosignal-Verarbeitungseinrichtung, welche das Signalverarbeitungsmittel umfaßt, integriert.

10. Endoskopiegerät nach Anspruch 9, dadurch gekennzeichnet,
daß das Signalverbindungsmittel (101) versehen ist mit einer ersten Signalleitung (33), welche an dem Abbildungsmittel (30) befestigt ist, einer zweiten Signalleitung (101), welche sich in axialer Richtung aus der Seite der Wickeltrommel (3) herauserstreckt und welche verbunden ist mit dem Signalverarbeitungsmittel (15) und daß rotierbare elektrische Kontakte (90) innerhalb der Wickeltrommel (3) sind, um die erste Signalleitung (33) und die zweite Signalleitung (101) miteinander elektrisch zu verbinden.

11. Endoskopiegerät nach Anspruch 9, dadurch gekennzeichnet,
daß das Signalverbindungsmittel (101) aus der einen Seite der Wickeltrommel (3) herausgeführt wird.

12. Endoskopiegerät nach Anspruch 11, dadurch gekennzeichnet,
daß der Stützrahmen, welcher die Wickeltrommel rotierbar stützt, ein Rohr (11) aufweist, welches sich von der einen Seite der Achse der Wickeltrommel (3) radial über die Peripherie der Wickeltrommel erstreckt, sich dann achsparallel hinter der Wickeltrommel erstreckt und sich schließlich auf der anderen Seite der Achse von der Wickeltrommel radial nach innen erstreckt, und daß das Signalverbindungsmittel (101) durch das Rohr von der anderen Seite der Wickeltrommel (3) eingeführt wird, zu der einen Seite der Wickeltrommel geführt wird und aus der einen Seite heraus zu der Signalverarbeitungseinrichtung (15) geführt wird.

13. Endoskopiegerät nach Anspruch 8, dadurch gekennzeichnet,
daß innerhalb dar Wickeltrommel (3) eine Signalregulierungsschaltung (98) für mindestens eines der Abbildungsmittel (30) und der Signalverarbeitungsmittel (15) vorgesehen ist.

14. Endoskopiegerät nach Anspruch 8, dadurch gekennzeichnet,
daß das Abbildungsmittel (30) ein abbildungsformendes optisches System (29) aufweist zur Bildung einer Abbildung von dem in dem Beobachtungsfenster (25) vorkommenden Licht und daß eine Einrichtung (30) für eine Abbildung im festen Zustand in der abbildungsformenden Position des abbildungsformenden optischen Systems (29) angeordnet ist.

15. Endoskopiegerät nach Anspruch 8, dadurch gekennzeichnet,
daß das signalverarbeitende Mittel (98) innerhalb der Wickeltrommel (3) vorgesehen ist.

16. Endoskopiegerät nach Anspruch 15, dadurch gekennzeichnet,
daß sich ein Signalkabel (101) aus der Seite der Wickeltrommel heraus erstreckt, welches das signalverarbeitende Mittel (15) und das Darstellungsmittel (17) miteinander verbindet.

17. Endoskopiegerät nach Anspruch 8, dadurch gekennzeichnet,
daß das Abbildungsmittel (30) ein abbildungsformendes optisches System (29) aufweist zur Bildung einer Abbildung von dem in dem Beobachtungsfenster (25) vorkommenden Licht, daß ein Abbildungs-Übertragungsmittel (211) durch das einführbare Bauteil (2) eingeführt wird, um die Abbildung, welche durch das abbildungsformende optische System (29) gebildet wird, zu der Wickeltrommel (3) zu übertragen und durch eine Abbildungsvorrichtung (217) zur Abbildung des Bildes, welches durch das Abbildungs-Übertragungsmittel (211) übertragen worden ist.

18. Endoskopiegerät nach Anspruch 8, dadurch gekennzeichnet,
daß das Signal-Übertragungsmittel (33) zur Übertragung eines Bild-Abbildungs-Informationssignals von dem Abbildungsmittel (30,217) und ein Signal-Aufnahmemittel (15,213) zur Aufnahme des Bild-Abbildungs-Informationssignals, welches von dem Signal-Übertragungsmittel (33) übertragen wird und zu dem Darstellungsmittel (17) hin übertragen wird, zwischen dem Abbildungsmittel (30,217) und dem Darstellungsmittel (17) angeordnet sind.

19. Endoskopiegerät nach Anspruch 8, dadurch gekennzeichnet,
daß ein Photokoppler zur Übertragung und Aufnahme eines Signals zwischen dem Abbildungsmittel (30) und dem Darstellungsmittel (17) unter Verwendung von Licht innerhalb der Wickeltrommel (3) angeordnet ist.

20. Endoskopiegerät nach Anspruch 9, gekennzeichnet durch weitere Verwendung eines Verbindungsmittels (90) zur rotierbaren Verbindung, mit der axialen Richtung der Wickeltrommel (3) als Mittelpunkt der Rotation, des Signal-Verbindungsmittels (101) mit dem Signal-Verarbeitungsmittel (15).

21. Endoskopiegerät nach Anspruch 20, gekennzeichnet durch weitere Verwendung eines hohlen Verkleidungsbauteils (103, 113), welches Teile des Bündels optischer Fasern (45) und des Signal-Verbindungsmittels (101) verwahrt, welche aus der Seite der Wickeltrommel (3) herauserstreckt sind.

22. Endoskopiegerät nach Anspruch 21, dadurch gekennzeichnet,
daß ein Ende des Verkleidungsbauteils (113) an der Wickeltrommel (3) befestigt ist und daß ein einzelnes Verbindungsmittel (310) vorgesehen ist mit einem an dem Faserbündel befestigten Rotationsteil, wobei das Signal-Verbindungsmittel (33) und das andere Ende des ersten Verkleidungsbauteils einen Halteteil (311) enthalten, welcher den Rotationsteil (313) rotierbar hält und welcher mit der Lichtquelleneinrichtung (330) und der Signal-Verarbeitungsvorrichtung, die miteinander kombiniert sind, verbunden ist.

## Revendications

1. Appareil d'endoscopie, comprenant :
un élément insérable flexible et oblong (2), possédant un hublot d'éclairage (53) et un hublot d'observation (25) à son extrémité distale (22) ;
un tambour enrouleur (3), auquel est fixée l'extrémité proximale dudit élément insérable et qui est à même d'enrouler et de loger ledit élément insérable, ledit tambour enrouleur comprenant un axe de rotation creux (5, 6) et étant supporté à rotation par un cadre de support (9) ;
un appareil d'alimentation en lumière (16), séparé dudit tambour enrouleur (3) et destiné à alimenter en lumière d'éclairage ledit hublot d'éclairage (53) ;
un moyen d'observation (17) pour recevoir la lumière en provenance d'un objet qui atteint ledit hublot d'observation ;
un faisceau de fibres optiques (45), qui est destiné à transmettre ladite lumière d'éclairage dudit appareil d'alimentation en lumière (16) audit hublot d'éclairage (53) et qui s'étend à l'intérieur dudit élément insérable (2) et possède, à une extrémité, un embout disposé au voisinage dudit hublot d'éclairage,
**caractérisé** en ce que ledit faisceau de fibres optiques comprend, à l'autre extrémité, une partie qui part dudit élément insérable, passe dans ledit axe de rotation creux (5) en provenance de l'intérieur dudit tambour enrouleur, puis sort axialement par un premier côté dudit tambour enrouleur (3), l'extrémité de ladite partie étant connectée audit appareil d'alimentation en lumière (16) afin de permettre à la lumière d'éclairage de pénétrer dans ledit faisceau de fibres optiques (45), et en ce qu'un connecteur rotatif (120) est prévu pour connecter à rotation audit appareil d'alimentation en lumière (16) l'extrémité de ladite partie du faisceau de fibres optiques provenant du tambour (3).

2. Appareil d'endoscopie selon la revendication 1, **caractérisé** en ce qu'un premier élément de recouvrement creux (113) est prévu pour loger la partie dudit faisceau de fibres optiques (45) qui sort axialement par ledit premier côté dudit tambour enrouleur (3).

3. Appareil d'endoscopie selon la revendication 2, **caractérisé** en ce que ledit premier élément de recouvrement (113) est fixé audit tambour enrouleur (3) et ledit connecteur rotatif (120) est muni d'une pièce rotative (124), connectée audit faisceau de fibres optiques (45) et audit premier élément de recouvrement (113), et d'une pièce de maintien (120) maintenant à rotation ladite pièce rotative (124) et connectée audit appareil d'alimentation en lumière (16).

4. Appareil d'endoscopie selon la revendication 3, **caractérisé** en ce qu'il comprend en outre un second élément de recouvrement (114) recouvrant ledit premier élément de recouvrement (113).

5. Appareil d'endoscopie selon la revendication 4, **caractérisé** en ce que ledit second élément de recouvrement (114) est fixé, à son extrémité côté tambour enrouleur, à une pièce (7) dudit cadre de support dudit tambour enrouleur (3) et, à son extrémité opposée, à la pièce de maintien (129) dudit connecteur (120).

6. Appareil d'endoscopie selon la revendication 5, **caractérisé** en ce qu'un élément (190), destiné à réduire le frottement entre ledit premier élément de recouvrement (113) et ledit second élément de recouvrement (114), est en outre prévu entre ledit premier élément de recouvrement et ledit second élément de recouvrement.

7. Appareil d'endoscopie selon la revendication 2, **caractérisé** en ce qu'une extrémité dudit premier élément de recouvrement (113) est fixée audit tambour enrouleur (3) et ledit connecteur rotatif (120) est muni d'une pièce rotative connectée audit faisceau de fibres optiques (45) et à l'extrémité opposée dudit premier élément de recouvrement (113), et une pièce de maintien destinée à maintenir ladite pièce rotative est prévue à rotation, avec la direction axiale comme centre de rotation, dans ledit appareil d'alimentation en lumière.

8. Appareil d'endoscopie selon la revendication 1, **caractérisé** en ce que ledit moyen d'observation possède un moyen de formation d'image (30) pour recevoir la lumière en provenance d'un objet qui atteint ledit hublot d'observation et former une image, un moyen de traitement de signaux (15) pour traiter les signaux fournis par ledit moyen de formation d'image, et un moyen de visualisation (17) pour recevoir une sortie de signal vidéo en provenance dudit moyen de traitement de signaux (15) et représenter visuellement l'image de l'objet.

9. Appareil d'endoscopie selon la revendication 1, **caractérisé** en ce que ledit moyen d'observation possède un moyen de formation d'image (30) pour recevoir la lumière en provenance d'un objet qui atteint ledit hublot d'observation (25) et former une image, un moyen de traitement de signaux (15) pour traiter les signaux fournis par ledit moyen de formation d'image, un moyen de liaison de signaux (101) reliant entre eux ledit moyen de formation d'image (30) et ledit moyen de traitement de signaux (15), et un moyen de visualisation (17) pour recevoir une sortie de signal vidéo en provenance dudit moyen de traitement de signaux (15) et représenter visuellement l'image de l'objet, et dans lequel un appareil externe incorpore ledit appareil d'alimentation en lumière (16) et un appareil de traitement de signaux vidéo comprenant ledit moyen de traitement de signaux.

10. Appareil d'endoscopie selon la revendication 9, **caractérisé** en ce que ledit moyen de liaison de signaux (101) est doté d'une première ligne de signaux (33) reliée audit moyen de formation d'image (30), d'une seconde ligne de signaux (101) sortant en direction axiale par le côté dudit tambour enrouleur (3) et reliée audit moyen de traitement de signaux (15), et de contacts électriques rotatifs (90), à l'intérieur dudit tambour enrouleur (3), pour relier électriquement entre elles ladite première ligne de signaux (33) et ladite seconde ligne de signaux (1O1).

11. Appareil d'endoscopie selon la revendication 9, **caractérisé** en ce que ledit moyen de liaison de signaux (101) sort par ledit premier côté dudit tambour enrouleur (3).

12. Appareil d'endoscopie selon la revendication 11, **caractérisé** en ce que ledit cadre de support supportant à rotation ledit tambour enrouleur possède un tube (11) s'étendant, à partir dudit premier côté de l'axe du tambour enrouleur (3), radialement au-delà du périmètre du tambour enrouleur, puis parallèlement à l'axe au-delà du tambour enrouleur et enfin radialement vers l'intérieur jusqu'à l'autre côté de l'axe du tambour enrouleur, et ledit moyen de liaison de signaux (101) est introduit dans ledit tube par ledit autre côté dudit tambour enrouleur (3), amené jusqu'audit premier côté dudit tambour enrouleur, et amené audit appareil de traitement de signaux (15) en sortant par ledit premier côté.

13. Appareil d'endoscopie selon la revendication 8, **caractérisé** en ce qu'un circuit de correction de signaux (98), pour au moins ledit moyen de formation d'image (30) ou ledit moyen de traitement de signaux (15), est prévu à l'intérieur dudit tambour enrouleur (3).

14. Appareil d'endoscopie selon la revendication 8, **caractérisé** en ce que ledit moyen de formation d'image (30) possède un système optique de formation d'image (29) pour former une image de la lumière atteignant ledit hublot d'observation, et un dispositif monolithique de formation d'image (30) disposé au point de formation d'image dudit système optique de formation d'image (29).

15. Appareil d'endoscopie selon la revendication 8, **caractérisé** en ce que ledit moyen de traitement de signaux (98) est prévu à l'intérieur dudit tambour enrouleur (3).

16. Appareil d'endoscopie selon la revendication 15, **caractérisé** en ce qu'un câble de signaux (101) sort par le côté dudit tambour enrouleur (3) et relie entre eux ledit moyen de traitement de signaux (15) et ledit moyen de visualisation (17).

17. Appareil d'endoscopie selon la revendication 8, **caractérisé** en ce que ledit moyen de formation d'image (30) possède un système optique de formation d'image (29) pour former une image de la lumière atteignant ledit hublot d'observation (25), un moyen de transmission d'image (211) inséré dans ledit élément insérable (2) pour transmettre audit tambour enrouleur (3) l'image formée par ledit système optique de formation d'image (29), et un appareil de formation d'image (217) pour former l'image transmise par ledit moyen de transmission d'image (211).

18. Appareil d'endoscopie selon la revendication 8, **caractérisé** en ce qu'un moyen de transmission de signaux (33), pour transmettre un signal d'information d'image vidéo dudit moyen de formation d'image (30, 217), et un moyen de réception de signaux (15, 213), pour recevoir ledit signal d'information d'image vidéo transmis par ledit moyen de transmission de signaux (33), sont prévus entre ledit moyen de formation d'image (30, 217) et ledit moyen de visualisation (17).

19. Appareil d'endoscopie selon la revendication 8, **caractérisé** en ce qu'un photocoupleur est prévu à l'intérieur dudit tambour enrouleur (3) pour transmettre et recevoir, à l'aide de lumière, un signal entre ledit moyen de formation d'image (30) et ledit moyen de visualisation (17).

20. Appareil d'endoscopie selon la revendication 9, **caractérisé** en ce qu'il comprend en outre un moyen de connexion (90) pour relier à rotation, avec la direction axiale du tambour enrouleur (3) comme centre de rotation, ledit moyen de liaison de signaux (101) audit moyen de traitement de signaux (15).

21. Appareil d'endoscopie selon la revendication 20, **caractérisé** en ce qu'il comprend en outre un élément de recouvrement creux (103, 113) logeant les parties dudit faisceau de fibres optiques (45) et du moyen de liaison de signaux (101) qui sortent par le côté dudit tambour enrouleur (3).

22. Appareil d'endoscopie selon la revendication 21, **caractérisé** en ce qu'une extrémité dudit élément de recouvrement (113) est fixée audit tambour enrouleur (3) et un unique moyen de liaison (310) est muni d'une pièce rotative (313) reliée audit faisceau de fibres, ledit moyen de liaison de signaux (33) et l'autre extrémité dudit premier élément de recouvrement comprenant une pièce de maintien (311), maintenant à rotation ladite pièce rotative (313) et reliée audit appareil d'alimentation en lumière (330) et à l'appareil de traitement de signaux, qui sont combinés.
